(19) Europäisches Patentamt
European Patent Office
Office européen des brevets

(11) **EP 4 761 408 A1**

(12) **EUROPEAN PATENT APPLICATION**
published in accordance with Art. 153(4) EPC

(43) Date of publication:
**17.06.2026 Bulletin 2026/25**

(21) Application number: **24850961.4**

(22) Date of filing: **05.08.2024**

(51) International Patent Classification (IPC):
*H04W 72/0446* (2023.01)

(52) Cooperative Patent Classification (CPC):
**H04L 1/16; H04L 5/00; H04W 72/0446;
H04W 72/1263; H04W 74/0833**

(86) International application number:
**PCT/CN2024/109776**

(87) International publication number:
**WO 2025/031316 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **09.08.2023 CN 202311002869**

(71) Applicant: **Spreadtrum Semiconductor (Nanjing)
Co., Ltd.
Nanjing, Jiangsu 211899 (CN)**

(72) Inventors:
• **YANG, Yuanqing
Nanjing, Jiangsu 211899 (CN)**
• **ZHOU, Huan
Nanjing, Jiangsu 211899 (CN)**
• **DING, Yu
Nanjing, Jiangsu 211899 (CN)**

(74) Representative: **Patentanwälte
Ruff, Wilhelm, Beier, Dauster & Partner mbB
Kronenstraße 30
70174 Stuttgart (DE)**

(54) **COMMUNICATION METHOD AND APPARATUS, AND STORAGE MEDIUM**

(57)     Provided in the present application are a communication method and apparatus, and a storage medium. The method comprises: within a target time period which is determined on the basis of a first time period, selecting a first RO group, to send a random access request, wherein the first time period is a time period corresponding to a first set, the first set comprises one or more first RO groups. ROs in the first RO group are mapped to a first SSB, and the target time period comprises K (K being a positive integer) associated mode periods. The method provided in the present application facilitates the effective determination of a time period corresponding to an RO group, so as to further determine the position of the RO group, thereby meeting the requirement of a terminal device for performing multi-PRACH transmission to enhance uplink coverage.

601. transmitting a random access request N times repeatedly
(based on a first RO group selected from a target time period)

**FIG. 6**

## Description

The present application claims priority to CN Patent Application No. 202311002869.5, entitled "COMMUNICATION METHOD AND APPARATUS, AND STORAGE MEDIUM", and filed with the China National Intellectual Property Administration on August 9, 2023, the entire contents of which are incorporated herein by reference.

## FIELD OF TECHNOLOGY

The present application relates to communication technology, and particularly to a communication method and apparatus and storage medium.

## BACKGROUND

A technical solution of "multi-Physical Random Access Channel (PRACH) transmission" is introduced in new radio (NR) to enhance uplink coverage. Specifically, when a terminal device supports a multi-PRACH transmission, the terminal device may transmit PRACH multiple times in one random access attempt. In other words, when the terminal device supports a multi-PRACH transmission, the terminal device may transmit random access requests multiple times in one random access attempt. For a terminal device that does not support a multi-PRACH transmission, the terminal device supports a single-PRACH transmission, in which case the terminal device may transmit PRACH only once in one random access attempt. That is, in case the terminal device only supports a single-PRACH transmission, the terminal device may transmit a random access request only once in one random access attempt.

For a multi-PRACH transmission, a terminal device transmits a random access request based on a PRACH occasion (RO) group. The RO group includes one or more ROs. The terminal device transmits multiple random access requests based on an RO group, in one random access attempt. In specific, the terminal device may select an RO group from a time period X (simplified as time period hereinafter) for a multi-PRACH transmission.

However, at present, it stays open as how to determine a length of the time period. A way is needed to determine the length of the time period to further determine a position of the RO group, which satisfies the requirements for multi-PRACH transmissions by terminal devices to enhance uplink coverage.

## SUMMARY

A communication method and apparatus and storage medium are provided in the embodiments of the present application, which facilitate an effective determination of a time period to which an RO group corresponds, for further determination of a position of the RO group, thereby satisfying the requirements for multi-PRACH transmissions by terminal devices for multiple repetitions of PRACH to enhance uplink coverage.

In a first aspect, a communication method is provided in the present application. The method comprises: selecting a first RO group from a target time period for transmitting a random access request, the target time period being determined according to a first time period, the first time period being a time period to which a first set corresponds, the first set including one or more first RO groups; wherein ROs in the first RO group are mapped to a first SSB, the target time period includes K association pattern periods, and K is a positive integer.

In a possible implementation, the target time period is the first time period.

In a possible implementation, the target time period is a maximum of time periods to which M sets correspond, wherein ROs in an RO group in an m-th set in the M sets are mapped to an m-th SSB in M SSBs, wherein $0<m<M+1$, m is a positive integer, and M is a positive integer.

In a possible implementation, the target time period is a least common multiple of time periods to which M sets correspond, and ROs in an RO group in an m-th set in the M sets are mapped to an m-th SSB in M SSBs, wherein $0<m<M+1$, m is a positive integer, and M is a positive integer.

In a possible implementation, Q is determined according to a number of repetitions of transmission of the random access request and a number of target ROs in an association pattern period, the Q being a number of association pattern periods in a second time period, the second time period being a time period to which a second set corresponds, and wherein there is at least one second RO group in the second set, wherein ROs in a the second RO group are mapped to a second SSB, the second SSB is any one of M SSBs, M is a positive integer, and Q is a positive integer.

In a possible implementation, Q is determined according to a ratio of a number of target ROs in a second time period to a number of target ROs in an association pattern period, the Q being a number of association pattern periods in the second time period, and wherein there is no target RO in the second time period that is not grouped into a second RO group, the second time period being a time period to which a second set corresponds, the second set including one or more second RO groups, and wherein ROs in a second RO group are mapped to a second SSB, the second SSB is any one of M SSBs, M is a positive integer, and Q is a positive integer.

In a possible implementation, the number of target ROs in the second time period is determined according to a least common multiple of a number of repetitions of transmission of the random access request and the number of target ROs in the association pattern period.

In a possible implementation, a target RO is an RO mapped to the second SSB, and wherein different target ROs are of different positions in time domain, and wherein respective second SSBs to which the different target ROs map correspond to a same set of preambles.

In a possible implementation, a target RO is a dedicated RO, and wherein the dedicated RO supports a multi-Physical Random Access Channel (PRACH) transmission and does not support a single-PRACH transmission.

In a possible implementation, the method further comprises: receiving a first indication, the first indication being used to indicate that the Q is determined by a first implementation, or, the first indication being used to indicate that the Q is determined by a second implementation; wherein the first implementation is that the Q is determined according to a ratio of a number of target ROs in a second time period to a number of target ROs in an association pattern period; and the second implementation is that the Q is determined according to a number of repetitions of transmission of the random access request and a number of target ROs in an association pattern period.

In a possible implementation, the method further comprises: receiving a second indication, the second indication being used to indicate that the random access request is transmitted on a dedicated RO, or, the second indication being used to indicate that the random access request is transmitted on a shared RO.

In a second aspect, a communication method is provided in the present application. The method comprises: receiving a random access request in at least one time period, the at least one time period including a target time period, the target time period being determined according to a first time period, the first time period being a time period to which a first set corresponds, the first set including one or more first RO groups; wherein ROs in the first RO group are mapped to a first SSB, the target time period includes K association pattern periods, and K is a positive integer.

In a possible implementation, the target time period is the first time period.

In a possible implementation, the target time period is a maximum of time periods to which M sets correspond, wherein ROs in an RO group in an m-th set in the M sets are mapped to an m-th SSB in M SSBs, wherein $0<m<M+1$, m is a positive integer, and M is a positive integer.

In a possible implementation, the target time period is a least common multiple of time periods to which M sets correspond, and ROs in an RO group in an m-th set in the M sets are mapped to an m-th SSB in M SSBs, wherein $0<m<M+1$, m is a positive integer, and M is a positive integer.

In a possible implementation, Q is determined according to a number of repetitions of transmission of the random access request and a number of target ROs in an association pattern period, the Q being a number of association pattern periods in a second time period, the second time period being a time period to which a second set corresponds, and wherein there is at least one second RO group in the second set, wherein ROs in a second RO group are mapped to a second SSB, the second SSB is any one of M SSBs, M is a positive integer, and Q is a positive integer.

In a possible implementation, Q is determined according to a ratio of a number of target ROs in a second time period to a number of target ROs in an association pattern period, the Q being a number of association pattern periods in the second time period, and wherein there is no target RO in the second time period that is not grouped into a second RO group, the second time period being a time period to which a second set corresponds, the second set including one or more second RO groups, and wherein ROs in a second RO group are mapped to a second SSB, the second SSB is any one of M SSBs, M is a positive integer, and Q is a positive integer.

In a possible implementation, the number of target ROs in the second time period is determined according to a least common multiple of a number of repetitions of transmission of the random access request and the number of target ROs in the association pattern period.

In a possible implementation, a target RO is an RO mapped to the second SSB, and wherein different target ROs are of different positions in time domain, and wherein respective second SSBs to which the different target ROs map correspond to a same set of preambles.

In a possible implementation, a target RO is a dedicated RO, and wherein the dedicated RO supports a multi-Physical Random Access Channel (PRACH) transmission and does not support a single-PRACH transmission.

In a possible implementation, the method further comprises: transmitting a first indication, the first indication being used to indicate that the Q is determined by a first implementation, or, the first indication being used to indicate that the Q is determined by a second implementation; wherein the first implementation is that the Q is determined according to a ratio of a number of target ROs in a second time period to a number of target ROs in an association pattern period; and the second implementation is that the Q is determined according to a number of repetitions of transmission of the random access request and a number of target ROs in an association pattern period.

In a possible implementation, the method further comprises: transmitting a second indication, the second indication being used to indicate that the random access request is transmitted on a dedicated RO, or, the second indication being used to indicate that the random access request is transmitted on a shared RO.

In a third aspect, a communication apparatus is provided in an embodiment of the present application. The apparatus comprises: a processor and a memory, the memory for storing a program; the processor for executing the program to perform the communication method according to the first aspect.

In a fourth aspect, a communication apparatus is provided in an embodiment of the present application. The apparatus comprises: a processor and a memory, the memory for storing a program; the processor for executing the program to perform the communication method according to the second aspect.

In a fifth aspect, a computer-readable storage medium having a program stored thereon is provided in the present application, and when the program is executed on a terminal device, the terminal device is caused to perform the communication method according to the first aspect, or, when the program is executed on a network device, the network device is caused to perform the communication method according to the second aspect.

In a sixth aspect, a computer program product comprising a program is provided in the present application, wherein when the program is executed on a processor of a terminal device, the terminal device is caused to perform the communication method according to the first aspect, or, when the program is executed on a processor of a network device, the network device is caused to perform the communication method according to the second aspect.

In a possible design, the program in the sixth aspect may be stored entirely or partially on a storage medium packaged together with the processor, or may be stored partially or entirely on a memory not packaged together with the processor.

In a seventh aspect, a communication apparatus is provided in an embodiment of the present application. The apparatus comprises: one or more functional modules, the one or more functional modules being configured to perform any communication method provided in the first aspect.

In an eighth aspect, a communication apparatus is provided in an embodiment of the present application. The apparatus comprises: one or more functional modules, the one or more functional modules being configured to perform any communication method provided in the second aspect.

In a ninth aspect, a communication system is provided. The system comprises: a communication apparatus for performing any one of the methods provided in the first aspect and a communication apparatus for performing any one of the methods provided in the second aspect.

The communication apparatus in the third aspect and the seventh aspect may be a chip or a terminal device, and the communication apparatus in the fourth aspect and the eighth aspect may be a chip or a network device.

## BRIEF DESCRIPTION OF THE DRAWINGS

FIG. 1A is a schematic flowchart of a contention-free random access procedure according to an embodiment of the present application;

FIG. 1B is a schematic flowchart of a contention-based random access procedure according to an embodiment of the present application;

FIG. 2 is a schematic diagram of an RO according to an embodiment of the present application;

FIGS. 3a-3d are schematic diagrams of association periods according to embodiments of the present application;

FIG. 4 is a schematic diagram of an association pattern period according to an embodiment of the present application;

FIG. 5 is a schematic diagram of an architecture of a communication system according to an embodiment of the present application;

FIG. 6 is a schematic flowchart of a communication method provided by an embodiment of the present application;

FIG. 7 is a schematic diagram of a target RO according to an embodiment of the present application;

FIG. 8 is a schematic diagram of mapping between ROs and SSBs according to an embodiment of the present application;

FIGS. 9-12 are schematic diagrams of RO groups in a second time period according to embodiments of the present application, respectively;

FIG. 13 is a schematic diagram of RO groups in a target time period according to an embodiment of the present application;

FIG. 14 is a structural schematic diagram of an embodiment of a communication apparatus according to the present application;

FIG. 15 is a structural schematic diagram of another embodiment of a communication apparatus according to the present application; and

FIG. 16 is a structural schematic diagram of yet another embodiment of a communication apparatus according to the present application.

## DETAILED DESCRIPTION

In embodiments of the present application, the character "/" may indicate that the related objects before and after it have an "or" relationship, unless stated otherwise. For example, A/B may indicate A or B. The term "and/or" describes a relationship between the related objects, indicating three types of relationships. For example, A and/or B may indicate the following three cases: A alone, both A and B, and B alone.

It should be noted that the terms "first" and "second" as used in the embodiments of the present application are used only for distinguishing descriptions and should not be construed as indicating or implying relative importance or implicitly indicating the number of technical features indicated, nor should they be construed as indicating or implying order.

In the embodiments of the present application, the term "at least one" refers to one or more, and the term "a plurality of" refers to two or more. In addition, the term "at least one of" or similar expressions refer to any combination of these items, which may include a single item or any combination of a single item or multiple items. For example, at least one of A, B and C may indicate: A; B; C; A and B; A and C; B and C; or A, B and C. Each of A, B and C may be an element or may be a set containing one or more elements.

In the embodiments of the present application, terms such as "exemplary", "in some embodiments" and "in another embodiment" are used to indicate that corresponding contents are used as an example, illustration, or explanation. Any embodiment or design described as "example" in the present application should not be construed as being preferable or advantageous over other embodiments or designs. To be precise, the use of the term "example" is intended to present a concept in a concrete way.

In the embodiments of the present application, the terms "of", "relevant" and "corresponding" can sometimes be used interchangeably. It should be noted that they have identical meanings, unless the differences are emphasized. In the embodiments of the present application, the terms "communication" and "transmission" may sometimes be used interchangeably. It should be noted that they have identical meanings, unless the differences are emphasized. For example, transmission may include transmitting and/or receiving, and it may be expressed as a noun or a verb.

The term "equal to" in the embodiments of the present application may be used with "greater than", applicable to the technical solution when "greater than" is used, or may be used with "less than", applicable to the technical solution when "less than" is used. It should be noted that when "equal to" is used with "greater than", it is not used with "less than"; and when "equal to" is used with "less than", it is not used with "greater than".

Some terms involved in the embodiments of the present application are illustrated below to facilitate understanding by those skilled in the art.

1. Terminal device.

A terminal device in the embodiments of the present application is a device with functionality of wireless transceiver, which may be referred to as a terminal, a user equipment (UE), a mobile station (MS), a mobile terminal (MT), an access terminal device, a vehicle-mounted terminal device, an industrial control terminal device, a UE unit, a UE station, a mobile station, a remote station, a remote terminal device, a mobile device, a UE terminal device, a wireless communication device, a UE agent, or a UE apparatus, etc. The terminal device may be stationary or mobile. It should be noted that the terminal device may support at least one wireless communication technology, such as long term evolution (LTE), new radio (NR), etc. For example, the terminal device may be a mobile phone, a pad, a desktop computer, a laptop, an all-in-one computer, a vehicle-mounted terminal, a virtual reality (VR) terminal device, an augmented reality (AR) terminal device, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, a cellular phone, a cordless phone, a session initiation protocol (SIP) phone, a wireless local loop (WLL) station, a personal digital assistant (PDA), a handheld device with functionality of wireless communication, a computing device, or another processing device connected to a wireless modem, a wearable device, a terminal device in a future mobile communication network, or a terminal device in a future evolved public land mobile network (PLMN), etc. In some embodiments of the present application, the terminal device may also be an apparatus with transceiver functionality, such as a chip system. The chip system may include a chip and may also include other discrete devices.

2. Network device.

In the embodiments of the present application, a network device is a device that provides wireless communication functions for terminal devices, and can also be referred to as an access network device, a radio access network (RAN) device, etc. The network device may support at least one wireless communication technology, such as LTE, NR, etc. For example, the network device includes but is not limited to: a next-generation nodeB (gNB) in a fifth-generation mobile communication system (5G), an evolved Node B (eNB), a radio network controller (RNC), a Node B (NB), a base station controller (BSC), a base transceiver station (BTS), a home base station (e.g., a home evolved Node B, or a home Node B, HNB), a baseband unit (BBU), a transmission and reception point (TRP), a transmission point (TP), a mobile switching center, etc. The network device may also be a wireless controller, a centralized unit (CU), and/or a distributed unit (DU) in a cloud radio access network (CRAN) scenario, or the network device may be a relay station, an access point, a vehicle-mounted device, a terminal device, a wearable device, a network device in future mobile communications, or a network device in a future evolved PLMN, etc. In some embodiments, the network device may also be an apparatus with the functionality of providing wireless communication for terminals device, such as a chip system. For example, the chip system may include a chip and may also include other discrete devices.

3. Random access

In the embodiments of the present application, uplink synchronization with a network device may be implemented by a terminal device through a random access procedure. From the perspective of conflict resolution in media access control (MAC) layer, random access procedures may be classified as a contention-based random access procedure and a contention-free random access procedure. The contention-based random access procedure may also be referred to as a conflict-based random access procedure. The contention-free random access procedure may also be referred to as a conflict-free random access procedure.

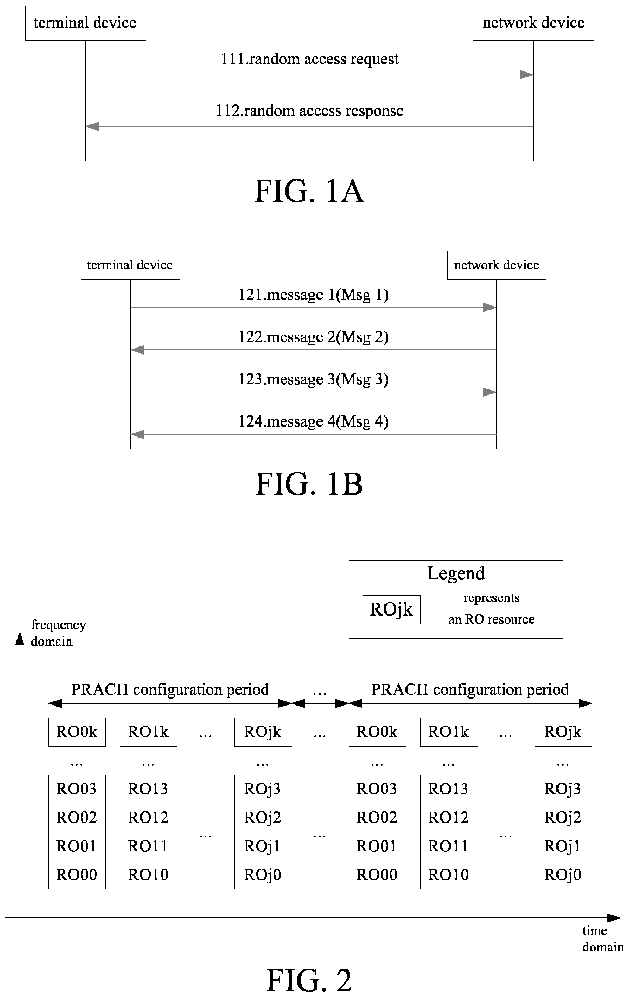

As shown in FIG. 1A, FIG. 1A is a flowchart of method of a contention-free random access procedure, and specifically including the following steps.

In Step 111, a terminal device transmits a random access request. Correspondingly, a network device receives the random access request. Specifically, the random access request includes a preamble allocated to the terminal device by the network device.

In Step 112, after receiving the random access request, the network device transmits a random access response (RAR). Correspondingly, the terminal device receives the RAR, thereby uplink synchronization is achieved.

Specifically, after receiving the random access request, the network device estimates a propagation delay with the terminal device based on the preamble. Then, the network device calibrates uplink timing based on the estimated propagation delay, and indicates the uplink timing to the terminal device through the random access response. For example, the network device may transmit the RAR on a payload of a physical downlink shared channel (PDSCH). Furthermore, the RAR may be scrambled by a random access radio network temporary identifier (RA-RNTI). In some embodiments, the value of the RA-RNTI is determined by a position of a time-frequency resource carrying the preamble.

For the terminal device, after transmitting the random access request, the terminal device may monitor a physical downlink control channel (PDCCH) within an RAR window according to the RA-RNTI for downlink control information (DCI). Then, the terminal device parses the payload of the PDSCH with the RA-RNTI according to the DCI for receiving the RAR scrambled by the RA-RNTI. If the RAR is received within the RAR window, the random access is determined to be successful, thereby the uplink time synchronization is achieved.

If the RAR is not received within the RAR window, the random access is determined to be failed, and the uplink time synchronization is not achieved.

In addition, contention-based random access procedures may be classified as a four-step random access procedure and a two-step random access procedure based on steps thereof.

As shown in FIG. 1B, FIG. 1B is a flowchart of method of a four-step random access procedure, and specifically including the following steps.

In 121, a terminal device transmits a random access request. Correspondingly, a network device receives the random access request. The random access request may also be referred as a message 1 (Msg1). A preamble is included in the Msg1.

In 122, the network device transmits an RAR in response to receiving the random access request. Correspondingly, the terminal device receives the RAR. The RAR may also be referred as a message 2 (Msg2).

For example, the Msg2 may contain a value of time adjustment required for specific uplink synchronization, uplink resources required for the terminal device to transmit a message 3 (Msg3), and a temporary cell-radio network temporary identifier (TC-RNTI), etc.

For detailed descriptions of steps 121 and 122, reference may be made to the related descriptions in FIG. 1A, which will not be repeated herein.

In 123, the terminal device transmits a Msg3 in response to receiving the random access response. Correspondingly, the network device receives the Msg3.

For example, the terminal device transmits the Msg3 on a physical uplink shared channel (PUSCH). For example, the Msg3 may contain a unique identifier of the terminal device. The identifier may be used for conflict resolution in a message 4 (Msg4). As an example, for a terminal device in a connected state, a unique identifier of the terminal device is a cell-radio network temporary identifier (C-RNTI). As another example, for a terminal device in a non-connected state, a unique identifier of the terminal device is a unique terminal device identifier from the core network.

In 124, the network device transmits a Msg4 in response to receiving the Msg3. Correspondingly, the terminal device receives the Msg4.

Specifically, in the mechanism of conflict resolution, the network device puts a identifier for identifying the terminal device uniquely in the Msg4 to indicate a winning terminal device. The terminal devices that did not win in the conflict resolution will reinitiate a random access procedure. If the PDSCH received by the terminal device in the Msg4 is scrambled by the TC-RNTI specified in the Msg2, a terminal device in a non-connected state may, after a successful random access, convert the TC-RNTI into a C-RNTI.

It should be noted that a first two steps( the steps of the Msg1 and the Msg2) in the four-step random access procedure mainly achieve uplink time synchronization, while the main purpose of the Msg3 and the Msg4 is to assign a unique and rightful identity to the terminal device for subsequent data transmission.

4. Random access preamble (RA preamble)

A random access preamble in the embodiments of the present application refers to a sequence transmitted by a terminal device for applying an access to a network, comprising, but not limited to, a gold sequence, an m-sequence, a zadoff-chu (ZC) sequence, etc. In addition to the above sequences, the preamble may also include a cyclic prefix and a guard interval. The random access preamble may be simplified as a preamble.

For example, there may be a plurality of (e.g., 64 or other numbers of) available RA preambles in each cell, which forms a sequence of random access preambles. Each random access preamble has a unique index (RA preamble index) in the sequence of random access preambles. The terminal device selects an RA preamble from the sequence of random access preambles (or the RA preamble is specified by the network device) for transmitting on a PRACH Occasion (RO), i.e., the RA preamble is carried (or transmitted) on the RO.

5. Random access occasion (RO)

An RO refers to time-frequency resources for PRACH transmission, or time-frequency resources for transmission of random access request. That is, the terminal device transmits a random access request based on the RO, or the terminal device transmits a random access request on the RO.

An RO may include resources in time domain and in frequency domain. For example, resources in time domain may be indicated by a time resource index, and resources in frequency domain may be indicated by a frequency resource index. For the resources in time domain corresponding to a time resource index, the number of ROs in frequency domain may be values of {1, 2, 4, 8}, configured by a higher layer parameter "msg1-FDM". That is, the number of ROs in frequency domain on the resources in time domain may be configured by msg1-FDM. The positions or resources in time domain of an RO is configured in time domain through a parameter "prach-ConfigurationIndex".

For convenience, descriptions such as "a resource in time domain", "different resources in time domain", and "a time unit" refer to resources in time domain corresponding to a time resource index. The time resource index is used to indicate the resources in time domain of the RO.

It should be noted that other parameter configurations may be used for configurations of higher layer parameters mentioned in the embodiments of the present application in practical. For example, although at present, prach-ConfigurationIndex is used to configure the positions or resources in time domain of an RO, and msg1-FDM is used to configure the number of ROs in frequency domain, in future protocols or related descriptions, the names may be changed. Therefore, a configuration of certain higher layer parameter mentioned in the embodiments of the present application is merely an example for convenient understanding and should not be construed as a limitation on the specific method for configuration in the present application.

The names of all parameters configured by the network device in the embodiments of the present application may be changed, but the meanings thereof stay the same.

The positions or resources in time domain of an RO may be configured by the network device for the terminal device through the higher layer parameter prach-Configuration Index. In a possible implementation, when configuring the higher layer parameter prach-ConfigurationIndex, different methods for configuration may be used by the network device for different preamble formats. A table of configuration for resources in time domain may be preconfigured in the network device and the terminal device. In response to receiving the higher layer parameter prach-ConfigurationIndex transmitted by the network device, the terminal device may determine the specific method for configuration by looking up the table.

Table 1

| prach-ConfigurationInde x | Preamble format | $n_f$ mod x=y | | Subframe number | Starting symbol | Number of PRACH slots within a subframe | $N_t^{RA,\ slot}$, number of time-domain PRACH occasions within a PRACH slot | $N_{dur}^{RA}$, PRACH duration |
|---|---|---|---|---|---|---|---|---|
| | | x | y | | | | | |
| | | | | | | | | |

Alternatively, for the table of configuration for the resources in time domain, there are three cases: a frequency band of a cell being frequency range 1 (FR1), with frequency division duplexing (FDD) mode/supplementary uplink (SUL); the frequency band of the cell being FR1, with time division duplexing (TDD) mode; and the frequency band of the cell being frequency range 2 (FR2), with TDD mode. Duplexing is a process for bidirectional communication on a single communication channel. Due to space limitations, only the headings of the table are introduced in the present application. For example, table 1 shows a possible method for configuration of prach-ConfigurationIndex.The configuration of random access for FR1 with FDD mode/supplementary uplink is defined in table 1. According to the prach-ConfigurationIndex configured for the cell in combination with table 1, the following may be obtained:

1). Preamble format.

2). $n_f$ mod x=y, where $n_f$ is the radio frame where ROs are located, the value of x is used to determine a PRACH configuration period, $x \in \{1, 2, 4, 8, 16\}$, $x \times 10$ is the duration of the PRACH configuration periods (in ms), i.e., 10 ms, 20 ms, ..., 160 ms. System frame of system frame number(SFN) 0 is taken as the starting point, and y is used to calculate the radio frame where the RO is located. The PRACH configuration period is a period configured, in configured resources in time domain of the ROs, for PRACH transmission, for example, $x \times 10$ mentioned above.

For example, x=2, i.e., the PRACH configuration period is 20 ms. If y=0, i.e., when $n_f$ is an even frame, $n_f$ mod x = y = 0 (i.e., ROs are in even frames); and if y=1, i.e., when $n_f$ is an odd frame, $n_f$ mod x = y = 1 (i.e., ROs are in odd frames).
As another example, x=4, i.e., the PRACH configuration period is 40 ms, and there are resources in time domain of ROs on every 40 ms radio frame. If y=0, when SFN = (0, 4, 8...), $n_f$ mod x = y =0 (i.e., ROs are in radio frames with SFN = (0, 4, 8...)); and if y=1, when SFN = (1, 5, 9...), $n_f$ mod x = y =1 (i.e., ROs are in radio frames with SFN = (1, 5, 9...)).

3.) Subframe number: a subframe number where the resources in time domain of the ROs are located.
4). Starting symbol: a starting symbol of the resources in time domain of the ROs in a PRACH slot. The PRACH slot refers to a slot containing the ROs.
5). Number of PRACH slots within a subframe: a number of PRACH slots in a subframe, with a value of 1 or 2.

6).  $N_t^{RA,\ slot}$ : a number of ROs contained in a PRACH slot in time domain.

7)  $N_{dur}^{RA}$ : a length of symbol in time domain of an RO.

For example, refer to FIG. 2, FIG. 2 is a schematic diagram of ROs according to an embodiment of the present application. The horizontal axis represents resources in time domain, and the vertical axis represents resources in frequency domain. ROjk refers to an RO with a time resource index of j (j is an integer greater than or equal to 0) and a frequency resource index of k (k is an integer greater than or equal to 0). For example, an RO01 in FIG. 2 refers to an RO with a time resource index of 0 and a frequency resource index of 1; and an RO10 refers to an RO with a time resource index of 1 and a frequency resource index of 0.
It should be noted that the resources in time domain of two ROs with adjacent time resource indices may be continuous or discontinuous in time domain. As an example,, referring to FIG. 2, in FIG. 2, an RO00 is an RO with a time resource index of 0, and resources in time domain of the RO00 are orthogonal frequency division multiplexing (OFDM) symbols with indices 0~1 in a fourth subframe of a system frame. An RO10 is an RO with a time resource index of 1, and resources in time domain of the RO10 are OFDM symbols with indices 2~3 in the fourth subframe of the system frame. In the case, the resources in time domain of RO00 and RO10 are continuous. As another example, an RO20 is an RO with a time resource index of 2, and resources in time domain of the RO20 are OFDM symbols with indices 0~1 in a third subframe of the system frame. An RO30 is an RO with a time resource index of 3, and resource in time domain of the RO30 are OFDM symbols with indices 0~1 in the fourth subframe of the system frame. In the case, the resources in time domain of the RO20 and the RO30 are discontinuous.
The resources in frequency domain of two ROs with adjacent frequency resource indices may be continuous or discontinuous in frequency domain. For example, referring to FIG. 2, in FIG. 2, an RO00 is an RO with a frequency resource index of 0, and an RO01 is an RO with a frequency resource index of 1. The RO00 and the RO01 are two ROs with adjacent frequency resource indices, and the resources in frequency domain of these two ROs are continuous in frequency domain.

6. RO group

An RO group contains one or more ROs, and a synchronization signal block (SSB) to which the one or more ROs map is the same. A number of ROs in the RO group is the same as a number of repetitions of transmission of PRACH.

In an optional implementation, in a plurality of ROs in an RO group, there are ROs with the same resource in frequency domain and different resources in time domain. For example, as shown in FIG. 2, an RO00 and an RO10 are two ROs with the same resource in frequency domain and different resources in time domain. Assuming that the RO00 and the RO10 are mapped to a same SSB, the RO00 and the RO10 are two ROs in an RO group.

In another optional implementation, in a plurality of ROs in an RO group, there are ROs with different resources in frequency domain and/or in time domain, where the resources in frequency domain and/or in time domain of the plurality of ROs being different may be considered as partially different or completely different. For example, as shown in FIG. 2, assuming that a plurality of ROs in an RO group are: an RO00, an RO11, an RO20, an RO31. The RO00 and the RO20 are ROs with the same resources in frequency domain and different resources in time domain; and the RO00 and the RO11 are ROs with both different resources in frequency domain and different resources in time domain.

7. Number of repetitions of transmission of random access request

A number of repetitions of transmission of random access request in the embodiments of the present application refers to a number of times that a terminal device transmits (or repeats) a random access request in a random access procedure. The number of repetitions of transmission of random access request may also be referred to as a PRACH repetition, a number of repetitions of transmission of PRACH, a Msg1 repetition, or a number of repetitions of transmission of message 1, etc.

For example, if the number of repetitions of transmission of random access request is 4, it may indicate repeating the transmission of the random access request for 4 times.

8. Single-transmission of PRACH

A single-transmission of PRACH may also be referred to as a single-PRACH transmission. Specifically, transmitting a random access request or PRACH by a terminal device only once in an attempt of random access (one RACH attempt) is supported by the single-PRACH transmission. One random access procedure is performed in one random access attempt. In other words, when a single-PRACH transmission is used by the terminal device, one random access request or PRACH is transmitted once in one random access procedure. For example, the four-step random access procedure taken as an example, a PRACH transmission may also be considered as a Msg1 transmission. That is, when a single-PRACH transmission is used by the terminal device, the Msg1 is transmitted once in one random access procedure.

9. Multi-transmission of PRACH

A multi-transmission of PRACH may also be referred to as a multi-PRACH transmission. Specifically, transmitting a random access request or PRACH by a terminal device multiple times in one random access attempt is supported by a multi-PRACH transmission. That is, when the multi-PRACH transmission is used by the terminal device, a random access request or PRACH may be transmitted multiple times in one random access procedure. In the embodiments of the present application, one random access attempt refers to one random access procedure. For example, the four-step random access procedure taken as an example, a PRACH transmission may also be considered as a Msg1 transmission. That is, when the multi-PRACH transmission is used by the terminal device, the multiple times of transmission of Msg1 is supported in one random access procedure. The multi-PRACH transmission may also be considered as repetitions of transmission of random access request or repetitions of transmission of Msg1.

For example, the multi-PRACH transmission is used by the terminal device, with 4 repetitions of PRACH taken as an example. Transmitting a random access request once on each of four ROs with different resources in time domain in one random access attempt may be supported by the terminal device.

It should be noted that the number of repetitions of PRACH may also be referred to as a number of repetitions of random access request, a PRACH repetition, a number of PRACH transmissions, etc. In the four-step random access procedure, the number of repetitions of PRACH may also be referred to as a Msg1 repetition or a number of repetitions of Msg1.

10. Dedicated RO

A dedicated RO in the embodiments of the present application refers to an RO that supports the multi-PRACH transmission and does not support the single-PRACH transmission. The dedicated RO may also be referred to as a dedicated RO, a separate RO, an additional RO, etc., which is not limited herein.

For ease of description, the term "dedicated RO", which refers to an RO that supports the multi-PRACH transmission and does not support the single-PRACH transmission, is used for illustration in the present application.

11. Shared RO

A shared RO in the embodiments of the present application refers to an RO that supports both the multi-PRACH transmission and the single-PRACH transmission. The shared RO may also be referred to as a shared RO, a legacy RO, a traditional RO, etc., which is not limited herein.

For ease of description, the term "shared RO", which refers to an RO that supports both the multi-PRACH transmission and the single-PRACH transmission, is used for illustration in the present application.

12. Rules for Mapping (association/correspondence) between SSBs and ROs

In NR, as the frequency of a cell increases, the coverage thereof decreases correspondingly. To increase the coverage of a cell, some broadcast information is no longer transmitted in an omni-directional manner but in a form of beam sweeping. At a certain moment, energy is concentrated in one direction, so a signal may be transmitted farther in that direction, but cannot be received in other directions. At the next moment, the signal is transmitted in another direction. Finally, by changing the direction of the beam continuously, the coverage of the entire cell is achieved. Each beam is associated with an SSB. SSBs are transmitted periodically in half-frame of 5 ms, i.e., one SS burst set. All SSBs in one SS burst set must be transmitted within a same half-frame periodically. An SSB is configured to appear several times in a specific half-frame at intervals. Each of the several SSBs corresponds to a direction of beam sweeping, with eventually an SSB in each direction.

Beams are used in a random access procedure. There is a plurality of transmission opportunities for SSBs in a period in time domain and there are corresponding numberings, which may correspond to different beams respectively. For a terminal device, only when the terminal device is under the coverage of the signal of beam sweeping of an SSB, there is an opportunity for the terminal device to transmit a preamble. When receiving the preamble from the terminal device, a network side determines the best downlink beam, i.e., which beam points to the terminal device. Therefore, the SSBs are required to be associated with preambles. Since preambles are able to be transmitted on ROs, the SSBs are required to be mapped to ROs.

By establishing an association between SSBs and ROs, after receiving SSBs, the terminal device may select an SSB correspondingly. Then, the terminal device transmits a random access request based on an RO associated with the selected SSB. After receiving the random access request, the network device may identify the SSB as selected by the terminal device and then transmit a random access response using the beam corresponding to the SSB as selected by the terminal device, which facilitates a higher possibility of uplink synchronization.

In an optional implementation, the mapping rules between SSBs and ROs are as follows:

Firstly, in a single RO, preamble indices are in an increasing order;
Secondly, frequency resource indices of frequency multiplexed ROs are in an increasing order;
Thirdly, time resource indices of time multiplexed ROs in a PRACH slot are in an increasing order; and
Fourthly, indices of PRACH slots are in an increasing order.

In other words, the mapping rules between SSBs and ROs may follow the following: 1. increasing a preamble index; 2. increasing a frequency resource index of an RO; 3. increasing a time resource index of the RO; and 4. increasing the index of a PRACH slot.

Alternatively, in the embodiments of the present application, existing mapping rules (or association rules) between SSBs and ROs may be used to establish the mapping relationship between SSBs and ROs, or improved association rules or mapping rules between SSBs and ROs may be used to establish the mapping relationship between SSBs and ROs, which is not limited herein. Alternatively, the mapping relationship between SSBs and ROs may also be referred to as an association between SSBs and ROs, a correspondence between SSBs and ROs, etc., which is not limited herein.

In an optional implementation, the mapping relationship between SSBs and ROs may also be indicated by a higher layer parameter "ssb-perRACH-Occasion (N)". For example, a value of N may be {1/8, 1/4, 1/2, 1, 2, 4, 8, 16}.

If N < 1, it means that one SSB may be mapped to 1/N ROs. For example, if N = 1/4, one SSB is associated with 4 ROs; and if N=1/8, one SSB is associated with 8 ROs.

If N = 1, it means that one SSB is mapped to one RO.

If N > 1, it means that N SSBs may be mapped in one RO. It should be noted that when a plurality of SSBs corresponds to one RO, the network device may distinguish between different SSBs corresponding to a same RO through preambles. For example, an RO1 is taken as an example. Both an SSB1 and an SSB2 correspond to the RO1. In the case, the SSB1 and the SSB2 may correspond to different preambles. For example, the SSB1 corresponds to a preamble 11 and a preamble 12; and the SSB2 corresponds to a preamble 21 and a preamble 22. Thus, when a terminal device selects the SSB1, it may transmit the preamble 11 or the preamble 12 based on the RO1. Alternatively, when the terminal device selects the SSB2, it may transmit the preamble 21 or the preamble 22 based on the RO1.

In summary, one RO may be associated or correspond to one SSB. Alternatively, a plurality of ROs may be associated with or correspond to one SSB. Alternatively, a plurality of SSBs may be associated with or correspond to one RO.

As shown in table 2 below, an example of a mapping table between SSBs and ROs is shown.

Table 2

| PRACH configuration period (msec) | Association period (number of PRACH configuration periods) |
|---|---|
| 10 | {1, 2, 4, 8, 16} |
| 20 | {1, 2, 4, 8} |
| 40 | {1, 2, 4} |
| 80 | {1, 2} |
| 160 | {1} |

In table 2, "PRACH configuration period" represents a configured period of PRACH; and "Association period (number of PRACH configuration periods)" represents an association period, i.e., a number of PRACH configuration periods required to map one complete round of SSBs configured by the network device. As may be seen from table 2, the minimum association period is 1.

ROs may be sufficient at least to map one complete round of SSBs in an association period. If remaining ROs are not sufficient to map one complete round of SSBs, the remaining ROs are left unused. If the remaining ROs may be sufficient to map another complete round of SSBs configured by the network device, mapping of the ROs may proceed.

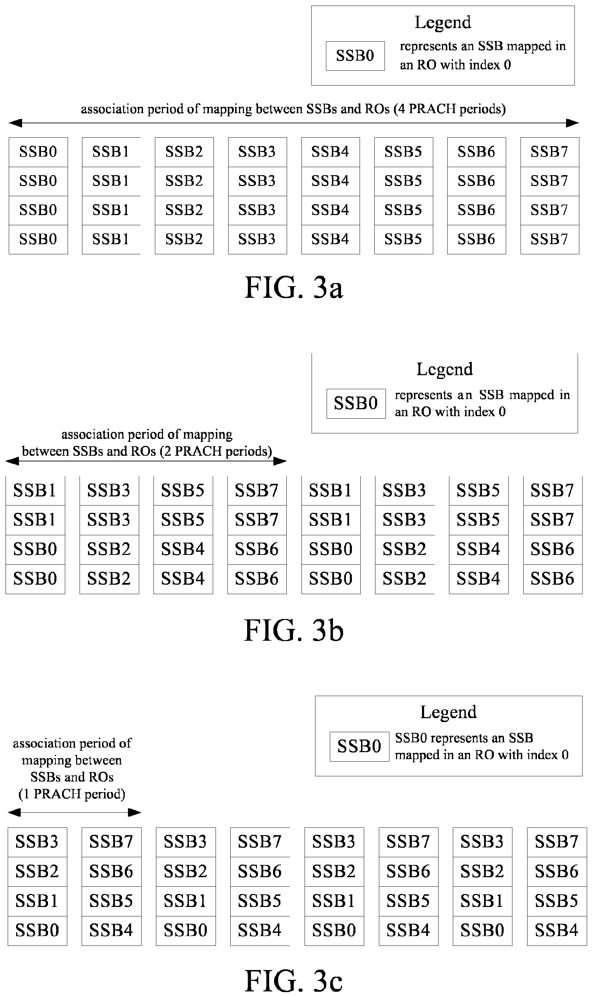

The mapping relationship between SSBs and ROs, as well as the association period, are illustrated below in combination with FIGS. 3a-3d, where a cell configured with 8 SSBs with indices 0~7, and parameter msg1-FDM = 4 is used as an example.

For example, refer to FIG. 3a, FIG. 3a is a schematic diagram of a mapping relationship between SSBs and ROs according to an embodiment of the present application. As shown in FIG. 3a, FIG. 3a shows the SSB-perRACH-Occasion mentioned above, i.e., the mapping relationship between SSBs and ROs in case of N=1/4. One block represents one RO. 8 SSBs, i.e., SSB0 to SSB7, are included in FIG. 3a. Since N=1/4, one SSB is associated with 4 ROs. In FIG. 3a, a number of the PRACH configuration periods required to map one complete round of SSBs (i.e., SSB0 to SSB7) configured by the network device is 4. That is, an association period between SSBs and ROs is 4 PRACH configuration periods. For example, if the PRACH configuration period is 10 ms, the association period is 40 ms.

As another example, refer to FIG. 3b, FIG. 3b is a schematic diagram of another mapping relationship between SSBs and ROs according to an embodiment of the present application. As shown in FIG. 3b, FIG. 3b shows the SSB-perRACH-Occasion mentioned above, i.e., the mapping relationship between SSBs and ROs in case of N=1/2. One block represents one RO. 8 SSBs, i.e., SSB0 to SSB7, are included in FIG. 3b. Since N=1/2, one SSB is associated with 2 ROs. In FIG. 3b, the number of the PRACH configuration periods required to map one complete round of SSBs(i.e., SSB0 to SSB7) configured by the network device is 2. That is, the association period between SSBs and ROs is 2 PRACH configuration periods. For example, if the PRACH configuration period is 10 ms, the association period is 20 ms.

As another example, refer to FIG. 3c, FIG. 3c is a schematic diagram of yet another mapping relationship between SSBs and ROs according to an embodiment of the present application. As shown in FIG. 3c, FIG. 3c shows the SSB-perRACH-Occasion mentioned above, i.e., the mapping relationship between SSBs and ROs in case of N=1. One block represents one RO. 8 SSBs, i.e., SSB0 to SSB7, are included in FIG. 3c. Since N=1, one SSB is associated with 1 RO. In FIG. 3c, the number of the PRACH configuration periods required to map one complete round of SSBs(i.e., SSB0 to SSB7) configured by the network device is 1. That is, the association period between SSBs and ROs is 1 PRACH configuration period. For example, if the PRACH configuration period is 10 ms, the association period is 10 ms.

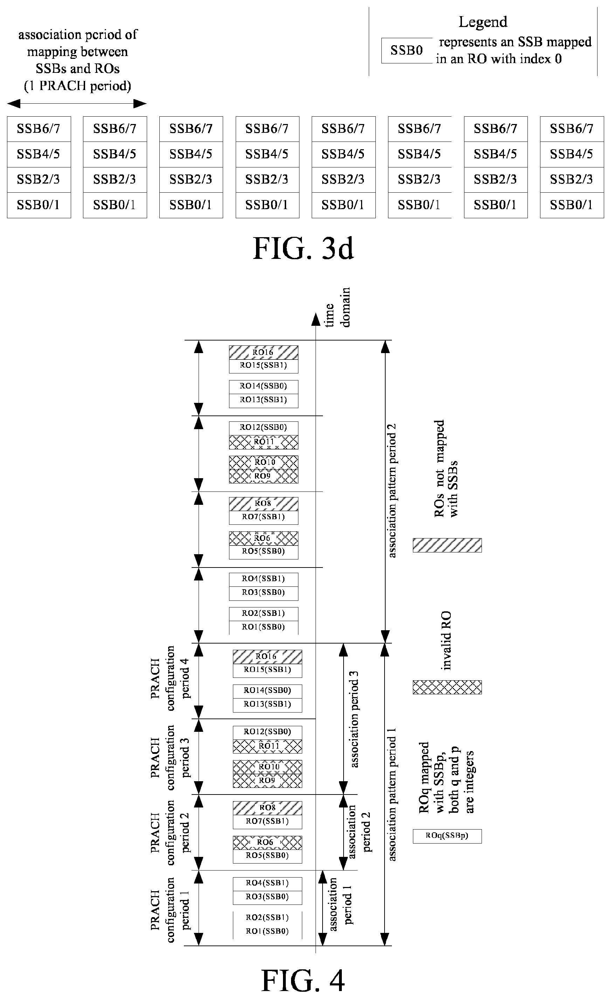

As another example, refer to FIG. 3d, FIG. 3d is a schematic diagram of yet another mapping relationship between SSBs and ROs according to an embodiment of the present application. As shown in FIG. 3d, FIG. 3d shows the SSB-perRACH-Occasion mentioned above, i.e., the mapping relationship between SSBs and ROs in case of N=2. One block represents one RO. 8 SSBs, i.e., SSBO to SSB7, are included in FIG. 3d. Since N=2, 2 SSBs may be mapped in one RO. According to the mapping table between SSBs and ROs shown in table 2, the minimum association period is 1. Therefore, as shown in FIG. 3d, when N=2, the number of PRACH configuration periods required to map one complete round of SSBs (i.e., SSBO to SSB7) configured by the network device in FIG. 3 is 1. That is, the association period between SSBs and ROs is 1 PRACH configuration period. For example, if the PRACH configuration period is 10 ms, the association period is 10 ms.

In an optional implementation, before performing random access, the terminal device measures SSBs in the cell. When the terminal device has a capability of beam correspondence to correspond the transport (Tx) beams to the receive (Rx) beams, it may apply the downlink receive beam for the uplink transmit beam.

For both the single-PRACH transmission and the multi-PRACH transmission, the terminal device transmits random access request based on the ROs.

Alternatively, after triggering a random access procedure, a terminal device may measure the reference signal receiving power (RSRP) of the SSBs transmitted by the network device, and determine SSBs that satisfy a condition of RSRP. If there are a plurality of SSBs satisfying the condition of RSRP, one SSB is selected therefrom. According to the association between the SSBs and ROs, one or more ROs associated with the SSB are determined. Then, a preamble is selected from available preambles, and the preamble is transmitted on the selected RO(s). That is, all the random access requests transmitted on the one or more ROs contain the preamble or an ID or index of the preamble. In other words, the terminal device may determine the RO resources for transmitting the random access request according to the association between SSBs and ROs. In this way, after receiving the random access request, the network device may identify the SSB selected by the terminal device, and thus transmit the random access response using the beam corresponding to the SSB selected by the terminal device, which facilitates a higher possibility of uplink synchronization.

Alternatively, the condition of RSRP may be that the measurement value of RSRP is greater than a threshold of RSRP (the threshold of RSRP is used to determine available SSBs). The threshold of RSRP may be preconfigured (e.g., specified by protocol), or indicated by the network device (e.g., the network device indicates the threshold of RSRP to the terminal device through a parameter "rsrp-ThresholdSSB"), or negotiated and determined by the network device and the terminal device, or may be determined by the terminal device in other ways, which is not limited herein.

13. Association (mapping/correspondence) period of mapping rules between SSBs and ROs

The association period in the embodiments of the present application refers to the duration required to map one complete round of SSBs configured by the network device based on the mapping rules between SSBs and ROs. The duration required to map one complete round of SSBs configured by the network device based on the mapping rules between SSBs and ROs is: one PRACH configuration period, or a plurality of PRACH configuration periods, depending on the configuration of resources in time domain and in frequency domain of ROs. That is, the duration required to map one complete round of SSBs configured by the network device is a number of PRACH configuration periods required to map one complete round of SSBs configured by the network device. The value of the PRACH configuration period is the value of $x \times 10$ in table 1 mentioned above.

It may be understood that at least one complete round of SSBs may be completely mapped in one association period. If the remaining ROs are not sufficient for mapping one complete round of SSBs, the remaining ROs may be left used.

There may be a plurality of slots in a PRACH configuration period. The plurality of slots may contain one or more PRACH slots. A PRACH slot contains one or more ROs for time division multiplexing. Through frequency division multiplexing, there may be a plurality of resources in frequency domain of RO (indicated by msg1-FDM) on a resource in time domain. The number of slots contained in one PRACH configuration period and the number of ROs contained in one PRACH slot may be indicated by the parameter prach-ConfigurationIndex. For example, a PRACH configuration period is 20 ms. Only some slots may contain ROs in the slots contained in the 20 ms. Such slots containing ROs are called as PRACH slots.

14. Association pattern period

An association pattern period includes one or more association periods, to ensure that the mapping between SSBs and ROs repeats at most every 160 ms. The number of ROs and the mapping relationship between SSBs and ROs are completely repeated in every two association pattern periods. However, due to configuration of uplink-downlink, collisions between U symbols and D symbols or U symbols and D symbols with dynamically scheduled resources, etc., the mapping between SSBs and ROs in two association periods may be different.

FIG. 4 shows a schematic diagram of an association pattern period exemplarily. A cell is configured with 2 SSBs, an SSB1 and an SSB2, respectively. a mapping rule between SSBs and ROs is one-to-one mapping. One rectangular block represents one RO. Referring to FIG. 4, one association pattern period may comprise 3 association periods. For example, an association pattern period 1 may contain an association period 1, an association period 2, and an association period 3. The durations of the association periods may be the same, or may also be different. For example, the association period 1 and the association period 2 each contain one PRACH configuration period (e.g., a PRACH configuration period 1 and a PRACH configuration period 2, respectively). The association period 3 contains two PRACH configuration periods (e.g., a PRACH configuration period 3 and a PRACH configuration period 4).

The durations, a number of ROs, and the mapping relationship between SSBs and ROs are the same in different association pattern periods. For example, the association pattern period 1 contains 16 ROs, i.e. RO1-RO16 respectively. 5 ROs (an RO1, an RO3, an RO5, an RO12, and an RO14) are mapped to the SSB0. 5 ROs (an RO2, an RO4, an RO7, an RO13, and an RO15) are mapped to the SSB1. 4 ROs (an RO6, an RO9, an RO10, and an RO11) are determined as invalid ROs (filled with crosshatch pattern) because they do not satisfy a definition of valid RO. 2 ROs (an RO8 and an RO16) are ROs not mapped to any SSB (filled with diagonal line) because in the association period 2, the remaining RO (i.e., the RO8) is not sufficient to map one complete round of SSBs, and in the association period 3, the remaining RO (i.e., the RO16) is not sufficient to map one complete round of SSBs. Similarly, the association pattern period 2 also contains 16 ROs, which are completely a repetition of the 16 ROs contained in association pattern period 1.

It should be noted that for valid ROs, related descriptions may be found in 3GPP standards. It may be understood that for Frequency Division Duplexing (FDD) mode or paired spectrum, all ROs are valid.

For time division duplexing (TDD) mode or unpaired spectrum, if no higher layer parameters (such as tdd-UL-DL-ConfigurationCommon) are configured by the network side, and a position of resource in time domain of an RO is after a position of symbol where the SSB is located, and is separated from the position of symbol of the last SSB received by the terminal device by at least N gaps of symbols, the RO is valid, i.e., a valid RO.

If the higher layer parameters (such as tdd-UL-DL-ConfigurationCommon) are configured by the network side, an RO is configured on uplink resources, and a position of resource in time domain of the RO is after the position of symbol where the SSB is located, and is separated from the position of symbol of the last SSB received by the terminal device by at least N gaps of symbols, the RO is valid, i.e., a valid RO.

15. Time period

A time period in the embodiments of the present application may contain one or more association pattern periods. One or more RO groups may be contained in the time period. A terminal device may transmit a random access request repeatedly by selecting one RO group from the time period.

The time period starts mapping from system frame with system frame number (SFN) 0. The number of RO groups and the positions of ROs as contained may be repeated in every two time periods.

The above description is a brief introduction to some concepts involved in the present application.

A communication method is proposed in the embodiments of the present application, which facilitates an effective determination of a time period to which an RO group corresponds to further determine a position of the RO group, thereby satisfying the requirements for multi-PRACH transmissions by terminal devices and for multiple repetitions of random access to enhance uplink coverage.

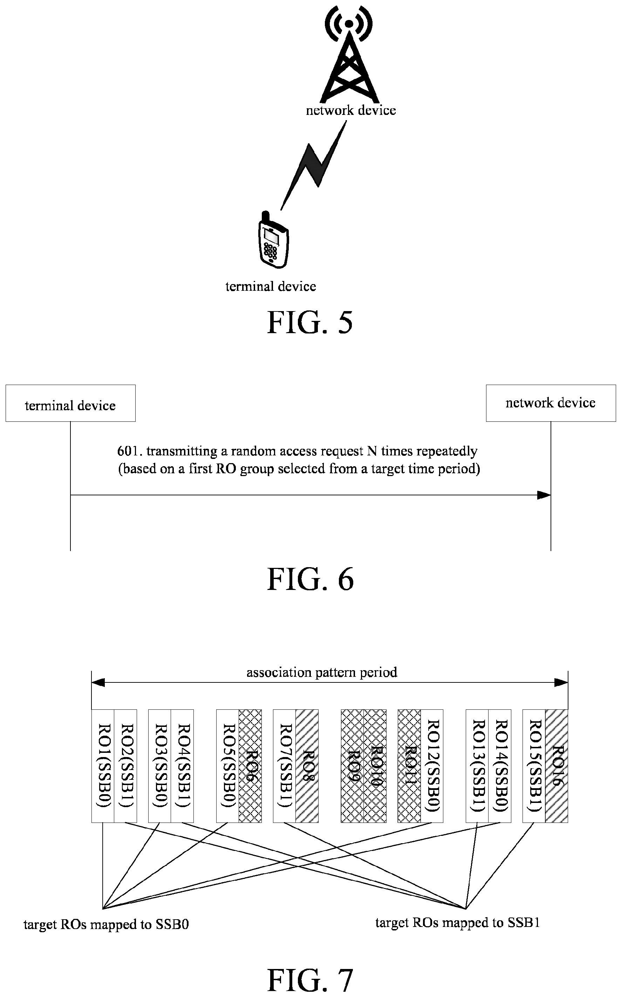

Now, the communication method provided by the embodiments of the present application will be described with reference to FIGS. 5-13 exemplarily.

FIG. 5 is a network architecture diagram of a communication system provided by an embodiment of the present application. The communication system shown in FIG. 5 include a terminal device and a network device. The terminal device and the network device may communicate wirelessly. Of course, the communication system shown in FIG. 5 is only an illustrative example and does not constitute a limitation on the communication system of the embodiments of the present application. For example, the communication system of the embodiments of the present application may further include a plurality of network devices, and/or a plurality of terminal devices, etc.

In addition, the embodiments of the present application may be applied to scenarios of terrestrial network or non-terrestrial network (such as satellite communication), etc., which are not limited herein.

FIG. 6 is a schematic flowchart of an embodiment of a communication method provided by the present application, specifically including the following steps:

Step 601, a terminal device selects a first RO group from a target time period for transmitting a random access request. That is, the terminal device transmits the random access request N times repeatedly based on the first RO group selected from the target time period. N is the number of ROs in the first RO group selected from the target time period, and N is an integer greater than 1. In an optional implementation, N is the number of repetitions configured by the network device. For example, if there are three first RO groups in the target time period, the terminal device may select a first one of the first RO groups for transmitting the random access request, and N is the number of ROs in the first one of the first RO groups.

Correspondingly, a network device receives the random access request in at least one time period. The at least one time period includes the target time period. Specifically, the network device may detect a plurality of ROs in each RO group in the at least one time period jointly to receive the random access request.

Alternatively, in subsequent procedure, after receiving the random access request transmitted by the terminal device, the network device transmits a random access response after the last RO of the first RO group (i.e., the RO group used by the terminal device to transmit the random access request). Correspondingly, the terminal device monitors an RAR window for the RAR.

The target time period is determined according to a time period to which a first set corresponds (denoted as a first time period). The first set includes one or more first RO groups. ROs in the first RO group are mapped to a first SSB. The target time period includes K association pattern periods, and K is a positive integer.

Specifically, the target time period may be the first time period, or may be a time period determined based on the first time period, which is not limited in the present application.

After triggering the random access procedure, the terminal device may measure the RSRP of SSBs transmitted by the network device and determine an SSB satisfying a condition of RSRP. If there are a plurality of SSBs satisfying the condition of RSRP, one SSB is selected therefrom. The SSB determined through such a process is the first SSB. It is assumed that the terminal device determines SSB1 as the first SSB, i.e., when the terminal device determines to perform random access with SSB1, in step 601, the terminal device may select a first RO group (ROs in the first RO group are mapped to SSB1) from the target time period for transmitting the random access request.

The target time period may be any one of the following cases 1 to 3:

Case 1: the target time period is a first time period.

For example, it is assumed that a first SSB is an SSB1, a first set is a set 1, i.e., ROs in the set 1 are mapped to the SSB1. If the time period to which the set 1 corresponds is a time period 1, in case 1, the target time period is the time period 1. In the case, the above K = a number of association pattern periods in the time period 1.

Case 2: the target time period is a maximum value in time periods to which M sets correspond.

ROs in an RO group in an m-th set of the M sets are mapped to an m-th SSB of M SSBs, where 0<m<M+1, m is a positive integer, and M is a positive integer.

M may be a number of SSBs configured in the cell, or may be other values, which is not limited in the present application. The M SSBs include a first SSB.

For example, it is assumed M=3. The correspondence among M SSBs, M sets, and time periods to which the M sets correspond may be seen in table 3. In table 3, ROs in a set 1 are mapped to an SSB1, the time period to which the set 1 corresponds is a time period 1; ROs in a set 2 are mapped to an SSB2, the time period to which the set 2 corresponds is a time period 2; and ROs in a set 3 are mapped to an SSB3, the time period to which the set 3 corresponds is a time period 3.

Table 3

| SSB | SET | TIME PERIOD TO WHICH THE SET CORRESPONDS |
|---|---|---|
| SSB1 (1st SSB) | Set 1 (1st set) | Time period 1 |
| SSB2 (2nd SSB) | Set 2 (2nd set) | Time period 2 |
| SSB3 (3rd SSB) | Set 3 (3rd set) | Time period 3 |

It is assumed that the first SSB is the SSB1, and the time period 2 > the time period 3 > the time period 1. In the case, in case 2, the target time period is the time period 2.

Further, time periods are each an integer multiple of association pattern periods. Comparison of the lengths of time periods may be implemented by comparing the number of association pattern periods contained in the time periods. Alternatively, the terminal device may determine the time period containing the largest number of association pattern periods as the target time period. For example, it is assumed that the numbers of association pattern periods contained in the three time periods in table 3 are as shown in table 4. Then, if K2 > K3 > K1, the time period 2 > the time period 3 > the time period 1. In the case, the above K = K2.

Table 4

| TIME PERIOD TO WHICH A SET CORRESPONDS | NUMBER OF ASSOCIATION PATTERN PERIODS CONTAINED IN THE TIME PERIOD |
|---|---|
| Time period 1 | K1 |
| Time period 2 | K2 |
| Time period 3 | K3 |

Case 3: the target time period is a least common multiple of time periods to which M sets correspond.

In case 3, when determining the least common multiple of the time periods, the least common multiple may be determined directly using the time periods. For example, based on the examples shown in table 3 and table 4, it is assumed that the first SSB is an SSB1, the duration of an association pattern period is T, the duration of a time period 2 = 4T (i.e., K2=4), the duration of a time period 3 = 3T (i.e., K3=3), and the duration of a time period 1 = 1T (i.e., K1=1). In this case, the target time period is 12T, and the above K = 12. Alternatively, the least common multiple of the numbers of association pattern periods in the time periods may be determined, thereby determining the target time period. For example, based on the examples shown in table 3 and table 4, it is assumed that the first SSB is the SSB1, K2=4, K3=3, K1=1. In this case, the least common multiple of K2, K3, and K1 is 12. That is, the target time period contains 12 association pattern periods, so the target time period is 12T, and in this case, the above K = 12.

In the case 1 above, the terminal device may calculate the time period to which the first set corresponds. After calculating the time period to which the first set corresponds, the target time period is determined. That is, in case 1, the time period is determined per SSB.

In case 2 and case 3 above, the terminal device may calculate the time period to which each set of the M sets corresponds, and determine the target time period according to the time periods to which all sets of the M sets correspond.

Specifically, in any one of cases 1-3 above, for any set or for any SSB, the terminal device may determine the time period by determining the number of association pattern periods contained in the time period. For example, based on the example shown in table 4, the terminal device may calculate time period 1 by determining K1, calculate time period 2 by determining K2, and calculate time period 3 by determining K3.

For a second set of the M sets, the time period to which the second set corresponds may be determined by the following implementations 1 or 2. The time period to which the second set corresponds may be referred to as a second time period. The second set includes at least one second RO group (or at least one second RO group is contained in the second time period). ROs in the second RO group are mapped to a second SSB. The second SSB is any SSB of the M SSBs. That is, for any set of the M sets, implementations 1 or 2 may be used to determine the time period corresponding to the set. The number of association pattern periods in the second time period is denoted as Q.

Implementation 1: Q is determined according to a number of repetitions of transmission of the random access request and the number of target ROs in the association pattern period. In implementation 1, there are at least one second RO group in the second set.

In the embodiments of the present application, alternatively, the target RO is an RO to which the second SSB maps, positions in time domain (or resources in time domain) of different target ROs are different, and respective second SSBs to which the different target ROs map correspond to a same set of preambles.

The position in time domain is the position where the target RO is located in time domain. That is, the plurality of target ROs mapped to the second SSB are located at different positions in time domain. The resources in frequency domain of different target ROs may be the same or different, which is not limited in the present application.

It should be noted that after SSBs and ROs are mapped, each SSB mapped to an RO corresponds to a set of preambles. For example, when the terminal device performs contention-based random access, the available set of preambles configured by the network device is {preamble 0, preamble 1, ..., preamble 63}. The set of preambles configured by the network device may be different from the above example, which is not limited in the present application. If one RO is mapped to one SSB, the set of preambles corresponding to the SSB may be {preamble 0, preamble 1, ..., preamble 63}. If a plurality of SSBs are mapped on one RO, the preambles in {preamble 0, preamble 1, ..., preamble 63} may be divided into a plurality of sets. The plurality of sets correspond to the plurality of SSBs one-to-one. Any two sets of the plurality of sets do not contain the same preamble. For example, it is assumed that RO01 is mapped to SSBO and SSB1. In the case, the set of preambles corresponding to SSBO may be {preamble 0, preamble 1, ..., preamble 31}, and the set of preambles corresponding to SSB1 may be {preamble 32, preamble 33, ..., preamble 63}.

When the terminal device transmits a random access request on an RO using one corresponding SSB, it may select a preamble to transmit from the set of preambles corresponding to the SSB. In N repetitions of transmission of the random access request, it is required for respective second SSBs to which different target ROs map to correspond to the same set of preambles to ensure that the ROs in the same RO group may complete the repetitions of the random access request.

Alternatively, all the preambles in the set of preamble may be preambles configured in the cell.

For example, it is assumed that the mapping relationship between ROs and SSBs contained in an association pattern period is as shown in FIG. 7. Five ROs (an RO1, an RO3, an RO5, an RO12, and an RO14) are all mapped to SSBO, with different positions in time domain, and the SSBs mapped by the ROs correspond to a same set of preambles {preamble 0, preamble 1, ..., preamble 63}. Accordingly, these ROs are target ROs mapped to an SSBO. Similarly, five ROs (an RO2, an RO4, an RO7, an RO13, and an RO15) are all mapped to an SSB1, with different positions in time domain, and the SSBs mapped by the ROs correspond to the same set of preamble {preamble 0, preamble 1, ..., preamble 63}. Accordingly, these ROs are target ROs mapped to the SSB1.

It may be understood that based on the examples shown in table 3 and table 4, if the second SSB is the SSB1, Q is K1.

After determining a number of repetitions of transmission of the random access request and a number of target ROs in the association pattern period, the terminal device may determine the second time period according to the number of repetitions of transmission of the random access request and the number of target ROs in the association pattern period.

It may be understood that the number of repetitions of transmission of the random access request may be specified by protocol, or preconfigured in the terminal device, or indicated by the network device, which is not specifically limited in the embodiments of the present application.

In some optional embodiments, the terminal device may determine the minimum number of association pattern periods required for constituting a second RO group according to the number of repetition of transmission of the random access request and the number of target ROs in the association pattern period. The minimum number is the number of association pattern periods contained in the second time period.

Specifically, Q may be $\left\lceil \dfrac{\text{a number of repetitions of the random access request}}{\text{a number of target ROs in the association pattern period}} \right\rceil$ , where $\lceil \ \rceil$ is the ceiling symbol.

For example, it is assumed that a number of repetitions of transmission of the random access request is 4, and the number of target ROs in the association pattern period is 5. Then, at least one association pattern period is required for constituting one second RO group, i.e., the second time period contains one association pattern period. Alternatively, it is assumed that the number of repetitions of transmission of the random access request is 8, and the number of target ROs in the association pattern period is 5. Then, at least two association pattern periods are required for constituting one second RO group, i.e., the second time period contains two association pattern periods. In the example, the second time period includes one second RO group.

As an example, it is assumed that the number of repetitions of transmission of the random access request is 2, and the number of target ROs in the association pattern period is 5. Then, at least one association pattern period is required for constituting one second RO group, i.e., the second time period contains one association pattern period. In the example, the second time period includes two second RO groups.

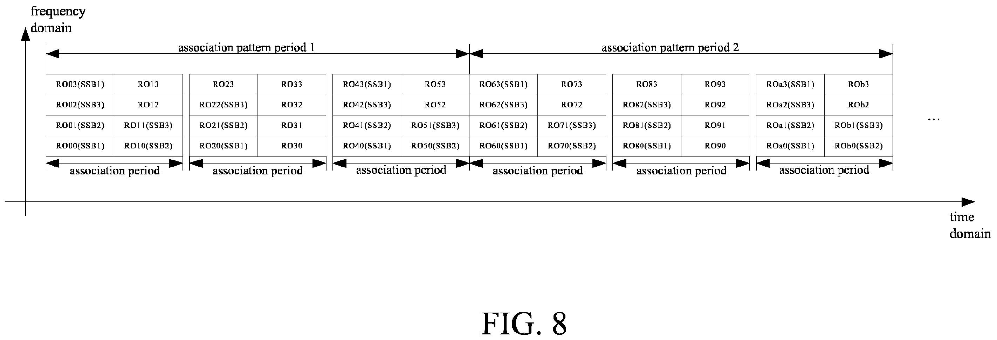

Now, the method for calculating the second time period in implementation 1 is illustrated with reference to FIGS. 8-10.

For example, refer to FIG. 8. Taking a second SSB which is SSB2 as an example, a number of target ROs mapped to the SSB2 in an association pattern period 1 is 5. For example, the 5 target ROs may be an RO01, an RO10, an RO21, an RO41, and an RO50.

Subsequently, the minimum number of association pattern periods required for constituting one second RO group may be determined according to the number of repetitions of transmission of the random access request and the number of target ROs in the association pattern period.

It is assumed that a number of repetitions of transmission of the random access request is 2, i.e., the number of target ROs in one second RO group is 2. Since the number of target ROs in one association pattern period is 5, the minimum number of association pattern periods required for constituting one second RO group is 1, i.e., the second time period contains 1 association pattern period.

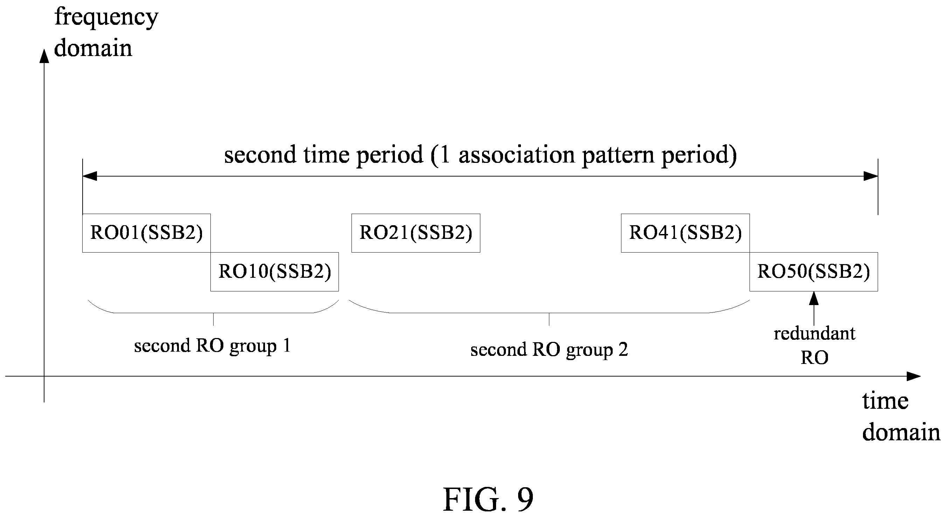

FIG. 9 shows exemplarily a schematic diagram of second RO groups where the second SSB is SSB2 in FIG. 8. Referring to FIG. 9, a second time period contains one association pattern period. The second time period contains two second RO groups, for example, a second RO group 1 and a second RO group 2. The second RO group 1 contains two target ROs, an RO01 and an RO10. The second RO group 2 contains two target ROs, an RO21 and an RO41. Since there is no target RO in time domain to form a second RO group with the RO50, the RO50 is a redundant RO.

A redundant RO may also be called an orphan RO. If in the second time period, a target RO does not belong to any second RO group, the RO may be called as a redundant RO or an orphan RO.

It is assumed that a number of repetitions of transmission of the random access request is 8, i.e., the number of target ROs in one second RO group is 8. The number of target ROs in one association pattern period is 5. That is, the minimum number of association pattern periods required for constituting one second RO group is 2, i.e., the second time period contains 2 association pattern periods.

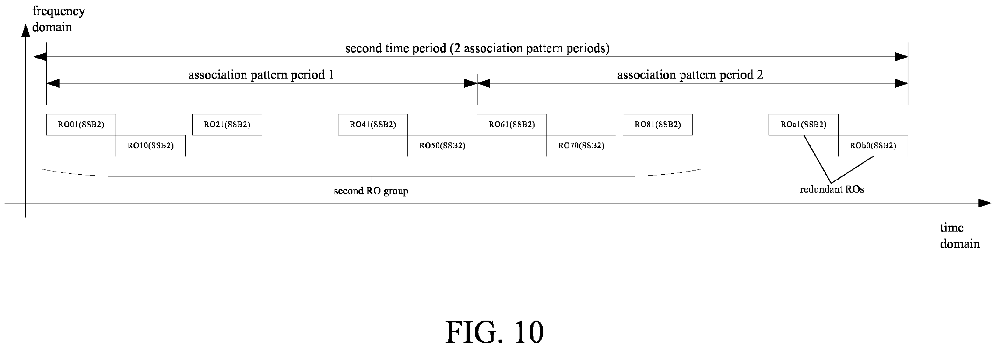

FIG. 10 shows exemplarily a schematic diagram of second RO groups where the second SSB is SSB2 in FIG. 8. Referring to FIG. 10, a second time period contains 2 association pattern periods, for example, an association pattern period 1 and an association pattern period 2. The second time period contains a second RO group. For example, the second RO group contains 8 ROs: an RO01, an RO10, an RO21, an RO41, an RO50, an RO61, an RO70, and an RO81. Since there is no target RO in time domain to form an RO group with an ROa1 and an Rob0, the ROa1 and the Rob0 are redundant ROs.

In implementation 1, since there may be redundant ROs, the redundant ROs, although mapped to SSBs, may not be used to transmit preambles, i.e., may not be used to transmit random access requests. Therefore, the RO resources may be wasted.

In implementation 2, Q is determined according to a ratio of a number of target ROs in the second time period to the number of target ROs in the association pattern period. In implementation 2, there is no target RO in the second time period that is not grouped into a second RO group, i.e., there is no redundant RO, thereby utilization of the RO resources is improved.

It may be understood that based on the examples shown in table 3 and table 4, if the second SSB is the SSB1, Q is K1.

After determining the number of target ROs in the association pattern period, the terminal device may determine Q according to the ratio of the number of target ROs in the second time period to the number of target ROs in the association pattern period.

For example, Q may be the ratio of the number of target ROs in the second time period to the number of target ROs in the association pattern period.

For example, Q may also be W times of the ratio of the number of target ROs in the second time period to the number of target ROs in the association pattern period, and where W is a positive integer greater than 1.

For ease of description, the example is used for exemplification where Q is the ratio of the number of target ROs in the second time period to the number of target ROs in the association pattern period, as follows.

The number of target ROs in the second time period may be determined according to a least common multiple of a number of repetitions of transmission of the random access request and the number of target ROs in the association pattern period.

For example, the number of target ROs in the second time period may be the least common multiple of the number of repetitions of transmission of the random access request and the number of target ROs in the association pattern period.

For another example, the number of target ROs in the second time period may also be a common multiple (not the least common multiple) of the number of repetitions of transmission of the random access request and the number of target ROs in the association pattern period. For example, taking the number of repetitions of transmission of the random access request of 2 and the number of target ROs in the association pattern period of 3 as an example, since the least common multiple of 2 and 3 is 6, the number of target ROs in the second time period is 6. After calculation, the ratio of the number of target ROs in the second time period to the number of target ROs in the association pattern period is 2. Therefore, the second time period may include 2 association pattern periods. In the case, there are 6 target ROs in the second time period, so the second time period may just include 3 second RO groups, with no redundant RO.

As another example, taking the number of repetitions of transmission of the random access request of 2 and the number of target ROs in the association pattern period of 4 as an example, since the least common multiple of 2 and 4 is 4, the number of target ROs in the second time period is 4. After calculation, the ratio of the number of target ROs in the second time period to the number of target ROs in the association pattern period is 1. Therefore, the second time period may include 1 association pattern period. In the case, there are 4 target ROs in the second time period, so the second time period may just include 2 second RO groups, with no redundant RO.

It may be understood that the number of repetitions of transmission of the random access request may be specified by protocol, or preconfigured in the terminal device, or indicated by the network device, which is not specifically limited in the embodiments of the present application.

Now, the method for calculating the second time period in implementation 2 is illustrated with reference to FIGS. 8, 11 and 12.

For example, SSB2 in FIG. 8 is taken as an example. It is assumed that a number of repetitions of transmission of the random access request is 2, i.e., a number of target ROs in a second RO group is 2.

Subsequently, the number of target ROs in the second time period may be calculated according to a least common multiple of the number of repetitions of transmission of the random access request and the number of target ROs in the association pattern period. In the embodiments of the present application, the number of target ROs in the second time period is the least common multiple of 2 and 5, which is 10.

Then, the second time period is determined according to the ratio of the number of target ROs in the second time period to the number of target ROs in the association pattern period. The number of association pattern periods contained in the second time period is the ratio of 10 to 5, which is 2, i.e., the second time period includes 2 association pattern periods.

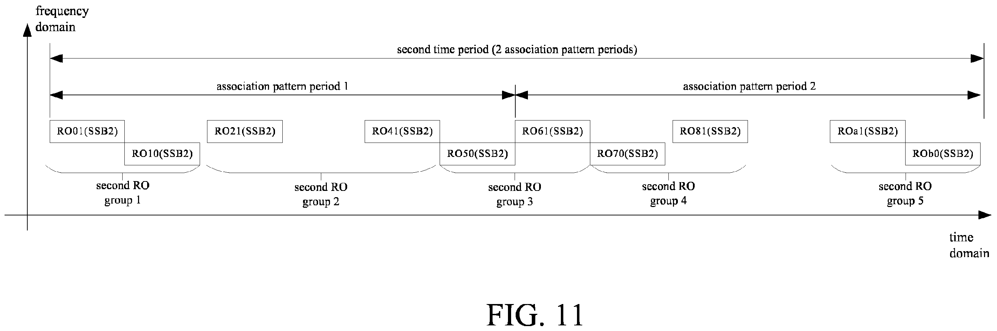

FIG. 11 shows exemplarily a schematic diagram of second RO groups where the second SSB is SSB2 in FIG. 8. Referring to FIG. 11, a second time period contains 2 association pattern periods, for example, an association pattern period 1 and an association pattern period 2. The second time period may contain 5 second RO groups, for example, a second RO group 1, a second RO group 2, a second RO group 3, a second RO group 4, and a second RO group 5. Each second RO group may contain 2 ROs. For example, the second RO group 1 contains an RO01 and an RO10, the second RO group 2 contains an RO21 and an RO41, the second RO group 3 contains an RO50 and an RO61, the second RO group 4 contains an RO70 and an RO81, and the second RO group 5 contains an ROa1 and an RO b0. In time domain, positions in time domain of the ROs in the above 5 second RO groups are different. In frequency domain, positions in frequency domain of any two ROs in the above 5 second RO groups may be the same or different.

As another example, SSB1 in FIG. 8 is taken as an example. The number of target ROs of different positions in time domain, which are mapped to SSB1 one association pattern period is 3. For example, the 3 target ROs of different positions in time domain may be the RO00, the RO20, and the RO40, or may be the RO03, the RO20, and the RO40, or may be the RO00, the RO20, and the RO43, or may be the RO03, the RO20, and the RO43.

Subsequently, the number of target ROs in the second time period may be calculated according to a least common multiple of the number of repetitions of transmission of the random access request and the number of target ROs in the association pattern period. It is assumed that the number of repetitions of transmission of the random access request is 4, the number of target ROs in a second RO group is 4. The number of target ROs in the second time period is a least common multiple of 3 and 4, which is 12.

Then, the second time period is determined according to the ratio of the number of target ROs in the second time period to the number of target ROs in the association pattern period. The number of association pattern periods contained in the second time period is the ratio of 12 to 3, which is 4, i.e., the second time period includes 4 association pattern periods.

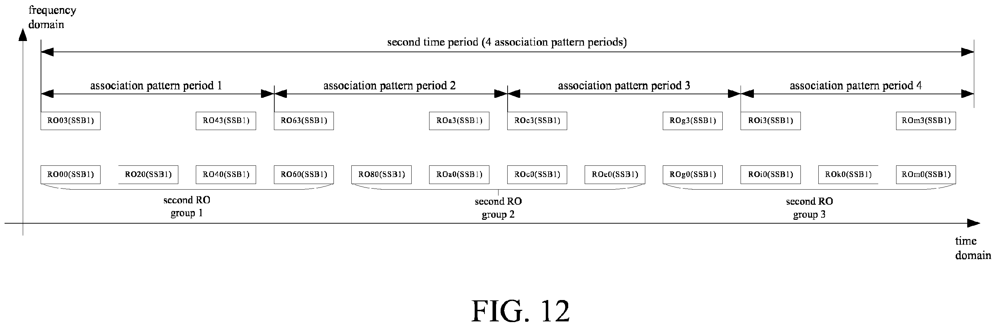

FIG. 12 shows exemplarily a schematic diagram of second RO groups where the second SSB is SSB1 in FIG. 8. Referring to FIG. 12, a second time period may contain 4 association pattern periods, for example, an association pattern period 1, an association pattern period 2, an association pattern period 3, and an association pattern period 4. The second time period may contain 3 second RO groups, for example, an second RO group 1, an second RO group 2, and an second RO group 3. Each second RO group may contain 4 ROs. For example, the second RO group 2 is taken as an example. The second RO group 2 may contain an RO80, an ROa0, an ROc0, and an ROe0, or may contain the RO80, an ROa3, the ROc0, and the ROe0, or may contain the RO80, the ROa0, an ROc3, and the ROe0, or may contain the RO80, the ROa3, the ROc3, and the ROe0.

In some optional embodiments, the second time period may also be determined by a ratio of a number of repetitions of transmission of the random access request to a greatest common divisor. The greatest common divisor may be the greatest common divisor of a number of target ROs in an association pattern period and the number of repetitions of transmission of the random access request.

It may be seen that the second time period may be obtained by calculation through various mathematical methods, such as the least common multiple or the greatest common divisor, which are not specifically limited in the embodiments of the present application.

It may be understood that by determining the number of association pattern periods contained in the second time period through implementation 2, the redundant ROs may be avoided, thereby utilization of the RO resources is improved.

In some optional embodiments, the terminal device may include both implementation 1 and implementation 2 for calculating the second time period. The terminal device may use either of the above two methods for calculation, or may use a default or configured method for calculation of the above two methods.

As to which method for calculation the terminal device specifically uses, it may be preconfigured in the terminal device, or specified in the protocol, or indicated by the network device. This is not specifically limited in the embodiments of the present application.

The network device may transmit an indication to the terminal device based on factors such as the network environment to indicate which method for calculation the terminal device should use. The network environment may include, but is not limited to, cell load, network device coverage, etc. In some embodiments, the network environment may also include other situations, which are not specifically limited in the embodiments of the present application.

For example, the network device may transmit a first indication to the terminal device. Correspondingly, the terminal device may receive the first indication.

In a first case, the first indication is used to indicate that Q is determined with implementation 1 (which may also be called the second implementation). In the case, if the terminal device is calculating the second time period with implementation 1 currently, when the terminal device receives the first indication, there is no need for the terminal device to switch; and if the terminal device is calculating the second time period with implementation 2 (which may also be called as the first implementation) currently, the terminal device needs to switch from implementation 2 to implementation 1.

In a second case, the first indication is used to indicate that Q is determined with implementation 2. In the case, if the terminal device is calculating the second time period with implementation 2 currently, when the terminal device receives the first indication, it may not require for the terminal device to switch; and if the terminal device is calculating the second time period with implementation 1 currently, it may be required for the terminal device to switch from implementation 1 to implementation 2.

In some optional embodiments, for the method for calculation of implementation 2, the ROs in the second RO group may be dedicated ROs. In the case, the range of time periods may be prevented from being too large (e.g., exceeding 160 ms), thereby avoiding the duration beyond 160 ms in the time period to be invalid due to changes in the mapping relationship between ROs and SSBs.

In some optional embodiments, for the method for calculation of implementation 1, the ROs in the second RO group may be shared ROs.

In some optional embodiments, the network device may transmit a second indication to the terminal device.

Correspondingly, the terminal device may receive the second indication. The second indication may be used to indicate that the terminal device transmits the random access request on a dedicated RO, or the second indication may be used to indicate that the terminal device transmits the random access request on a shared RO. In the case, the terminal device may perform a multi-PRACH transmission based on the indication of the network device.

In some optional embodiments, since there may be a plurality of RO groups in the target time period, and the positions in time domain of the ROs in the plurality of RO groups are different, the terminal device may select any RO group from the multiple RO groups, or the terminal device may select the RO group closest to the current moment of transmission as the final RO group for transmitting the random access request.

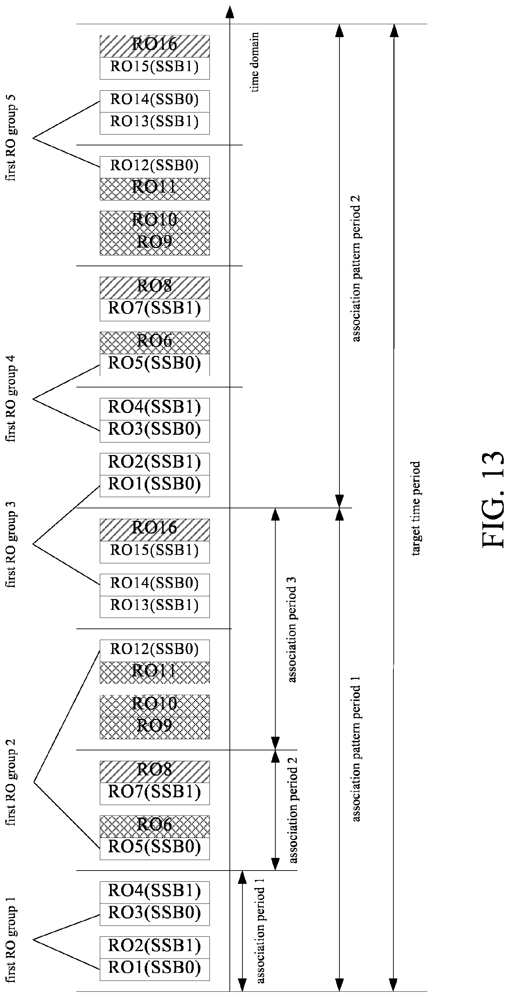

A terminal device selects a first RO group from a target time period for transmitting a random access request. For example, assuming that an association pattern period 1 and an association pattern period 2 shown in FIG. 4 constitute a target time period, where the first SSB is an SSBO, and a number of repetitions of transmission of the random access request is 2. Referring to FIG. 13, there are a total of 10 ROs in the target time period that are mapped to the first SSB, which may form 5 first RO groups. The terminal device may select a first RO group from the 5 first RO groups for transmitting the random access request.

Alternatively, before step 601, the method further comprises: the terminal device determining the target time period.

Alternatively, the method further includes: the network device determining the at least one time period mentioned above.

It may be understood that the terminal device may transmit the random access request in one time period repeatedly. Therefore, before transmitting the random access request, the terminal device may determine the target time period firstly. After determining the target time period, the terminal device may select a first RO group from the target time period for transmitting the random access request repeatedly.

It should be noted that the sets described in the above embodiments do not necessarily imply that RO groups are required to be divided into sets in the actual process of determining the time period. It is only for convenience of description that RO groups comprise ROs mapped to a same SSB are considered to be in the same set. In implementation, the terminal device may determine target ROs based on the mapping relationship between SSBs and ROs, and further determine Q and the time period.

According to the description in the above embodiments (e.g., table 3), there is a correspondence among the time periods, the SSBs, and the sets. Therefore, the "time period to which a set corresponds" may also be called as the "time period to which an SSB corresponds". For example, the "time period to which a first set corresponds" may also be called as the "time period to which a first SSB corresponds". Since RO groups are included in the set, the "time period to which a set corresponds" may also be called the "time period to which an RO group corresponds". For example, the "time period to which a first set corresponds" may also be called the "time period to which a first RO group corresponds".

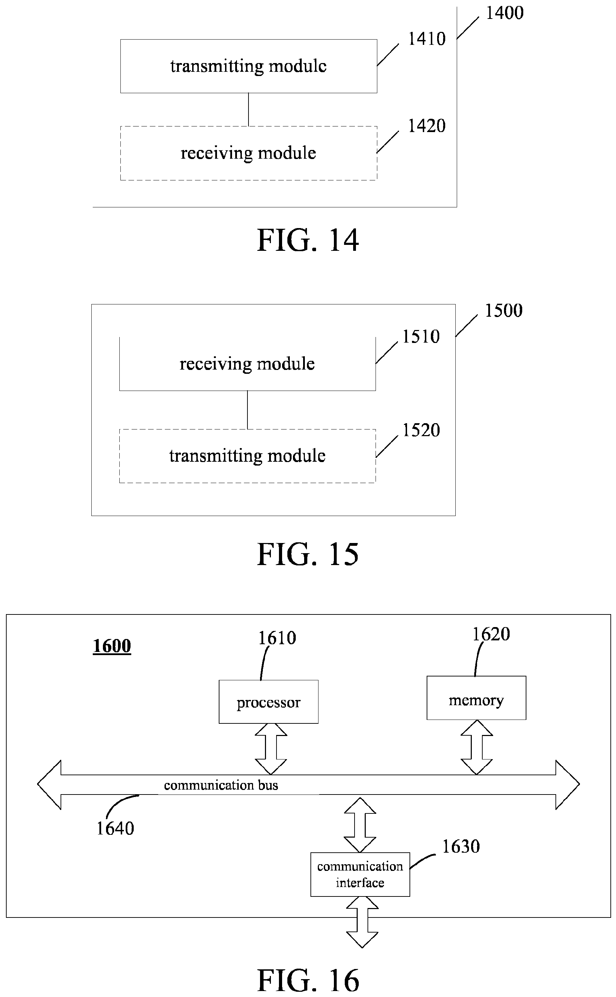

FIG. 14 is a structural schematic diagram of an embodiment of a communication apparatus according to the present application. As shown in FIG. 14, the communication apparatus 1400 may comprise: a transmitting module 1410.

The transmitting module 1410 is configured to select a first RO group from a target time period for transmitting a random access request, the target time period being determined according to a first time period, the first time period being a time period to which a first set corresponds, the first set including one or more first RO groups; wherein ROs in the first RO group are mapped to a first SSB, the target time period includes K association pattern periods, and K is a positive integer.

In a possible implementation, the target time period is the first time period.

In a possible implementation, the target time period is a maximum of time periods to which M sets correspond, wherein ROs in an RO group in an m-th set in the M sets are mapped to an m-th SSB in M SSBs, wherein $0<m<M+1$, m is a positive integer, and M is a positive integer.

In a possible implementation, the target time period is a least common multiple of time periods to which M sets correspond, and ROs in an RO group in an m-th set in the M sets are mapped to an m-th SSB in M SSBs, wherein $0<m<M+1$, m is a positive integer, and M is a positive integer.

In a possible implementation, Q is determined according to a number of repetitions of transmission of the random access request and a number of target ROs in an association pattern period, the Q being a number of association pattern periods in a second time period, the second time period being a time period to which a second set corresponds, and wherein there is at least one second RO group in the second set, wherein ROs in a second RO group are mapped to a second SSB, the second SSB is any one of M SSBs, M is a positive integer, and Q is a positive integer.

In a possible implementation, Q is determined according to a ratio of a number of target ROs in a second time period to a number of target ROs in an association pattern period, the Q being a number of association pattern periods in the second time period, and wherein there is no target RO in the second time period that is not grouped into a second RO group, the second time period being a time period to which a second set corresponds, the second set including one or more second RO groups, and wherein ROs in a second RO group are mapped to a second SSB, the second SSB is any one of M SSBs, M is a positive integer, and Q is a positive integer.

In a possible implementation, the number of target ROs in the second time period is determined according to a least common multiple of the number of repetitions of transmission of the random access request and the number of target ROs in the association pattern period.

In a possible implementation, a target RO is an RO mapped to the second SSB, and wherein different target ROs are of different positions in time domain, and wherein respective second SSBs to which the different target ROs map correspond to a same set of preambles.

In a possible implementation, a target RO is a dedicated RO, and wherein the dedicated RO supports a multi-Physical Random Access Channel (PRACH) transmission and does not support a single-PRACH transmission.

In a possible implementation, referring to FIG. 14, the communication apparatus 1400 may further comprise: a receiving module 1420, configured to receive a first indication, the first indication being used to indicate that the Q is determined by a first implementation, or, the first indication being used to indicate that the Q is determined by a second implementation; wherein the first implementation is that the Q is determined according to a ratio of a number of target ROs within a second time period to a number of target ROs in an association pattern period; and the second implementation is that the Q is determined according to a number of repetitions of transmission of the random access request and a number of target ROs in an association pattern period.

In a possible implementation, the receiving module 1420 is further configured to receive a second indication, the second indication being used to indicate that the random access request is transmitted on a dedicated RO, or, the second indication being used to indicate that the random access request is transmitted on a shared RO.

In a possible implementation, the communication apparatus 1400 may be a chip or a terminal device.

The communication apparatus 1400 provided in the embodiment shown in FIG. 14 may be used to perform the technical solutions of the embodiments of the method shown in the present application, the principles of implementation and technical effects thereof may be further made reference to the related descriptions in the embodiments of the method.

FIG. 15 is a structural schematic diagram of an embodiment of a communication apparatus according to the present application. As shown in FIG. 15, the communication apparatus 1500 may comprise: a receiving module 1510.

The receiving module 1510 is configured to receive a random access request in at least one time period, the at least one time period including a target time period, the target time period being determined according to a first time period, the first time period being a time period to which a first set corresponds, the first set including one or more first RO groups; wherein ROs in the first RO group are mapped to a first SSB, the target time period includes K association pattern periods, and K is a positive integer.

In a possible implementation, the target time period is the first time period.

In a possible implementation, the target time period is a maximum of time periods to which M sets correspond, wherein ROs in an RO group in an m-th set in the M sets are mapped to an m-th SSB in M SSBs, wherein $0<m<M+1$, m is a positive integer, and M is a positive integer.

In a possible implementation, the target time period is a least common multiple of time periods to which M sets correspond, and ROs in an RO group in an m-th set in the M sets are mapped to an m-th SSB in M SSBs, wherein $0<m<M+1$, m is a positive integer, and M is a positive integer.

In a possible implementation, Q is determined according to a number of repetitions of transmission of the random access request and a number of target ROs in an association pattern period, the Q being a number of association pattern periods in a second time period, the second time period being a time period to which a second set corresponds, and wherein there is at least one second RO group in the second set, wherein ROs in a second RO group are mapped to a second SSB, the second SSB is any one of M SSBs, M is a positive integer, and Q is a positive integer.

In a possible implementation, Q is determined according to a ratio of a number of target ROs in a second time period to a number of target ROs in an association pattern period, the Q being a number of association pattern periods in the second time period, and wherein there is no target RO in the second time period that is not grouped into a second RO group, the second time period being a time period to which a second set corresponds, the second set including one or more second RO groups, and wherein ROs in a second RO group are mapped to a second SSB, the second SSB is any one of M SSBs, M is a positive integer, and Q is a positive integer.

In a possible implementation, the number of target ROs in the second time period is determined according to a least common multiple of the number of repetitions of transmission of the random access request and the number of target ROs in the association pattern period.

In a possible implementation, a target RO is an RO mapped to the second SSB, and wherein different target ROs are of different positions in time domain, and wherein respective second SSBs to which the different target ROs map correspond to a same set of preambles.

In a possible implementation, a target RO is a dedicated RO, and wherein the dedicated RO supports a multi-Physical Random Access Channel (PRACH) transmission and does not support a single-PRACH transmission.

In a possible implementation, referring to FIG. 15, the communication apparatus 1500 further comprises: a transmitting module 1520 configured to transmit a first indication, the first indication being used to indicate that the Q is determined by a first implementation, or, the first indication being used to indicate that the Q is determined by a second implementation; wherein the first implementation is that the Q is determined according to a ratio of a number of target ROs within a second time period to a number of target ROs in an association pattern period; and the second implementation is that the Q is determined according to a number of repetitions of transmission of the random access request and a number of target ROs in an association pattern period.

In a possible implementation, the transmitting module 1520 is further configured to transmit a second indication, the second indication being used to indicate that the random access request is transmitted on a dedicated RO, or, the second indication being used to indicate that the random access request is transmitted on a shared RO.

In a possible implementation, the communication apparatus 1500 may be a chip or a network device.

It should be understood that the classification of each module in the communication apparatuses 1400 and 1500 above is merely a classification of logical functions. In actual implementation, they may be fully or partially integrated into one physical entity, or may be physically separated. Moreover, these modules may all be implemented in the form of software invoked by processing elements; or may all be implemented in the form of hardware; or part of modules may be implemented in the form of software invoked by processing elements, and part of modules may be implemented in the form of hardware. For example, the detection module may be a processing element set separately, or may be integrated into a certain chip of the terminal device or network device. The implementation of other modules is similar. In addition, these modules may be fully or partially integrated, or may be implemented independently. In the process of implementation, each step of the above method or each of the above modules may be completed by hardware integrated logic circuits in processor elements or instructions in software.

For example, the above modules may be one or more integrated circuits configured to perform the above method, such as: one or more Application Specific Integrated Circuits (ASICs), or one or more Digital Signal Processors (DSPs), or one or more Field Programmable Gate Arrays (FPGAs), etc. As another example, these modules may be integrated together and implemented in the form of a System-On-a-Chip (SOC).

FIG. 16 is a structural schematic diagram of a communication apparatus 1600 provided by an embodiment of the present application. The communication apparatus 1600 may include: at least one processor; and at least one memory coupled to the processor communicatively. The communication apparatus 1600 may be a terminal device or a network device. The memory stores program instructions executable by the processor. If the communication apparatus 1600 is a network device, the program instructions invoked by the processor may perform the actions performed by the network device in the communication method provided by the embodiments of the present application. If the communication apparatus 1600 is a terminal device, the program instructions invoked by the processor may perform the actions performed by the terminal device in the communication method provided by the embodiments of the present application.

As shown in FIG. 16, the communication apparatus 1600 is represented in the form of a general computing device. Components of the communication apparatus 1600 may include, but are not limited to: one or more processors 1610, a memory 1620, a communication bus 1640 connecting different system components (including the memory 1620 and the processor 1610), and a communication interface 1630.

The communication bus 1640 represents one or more of several types of structures of bus, including a memory bus or memory controller, a peripheral bus, a graphics acceleration port, a processor, or a local bus using any of a variety of architectures of bus. For example, these architectures include, but are not limited to, an Industry Standard Architecture (ISA) bus, a Micro Channel Architecture (MAC) bus, an Enhanced ISA bus, a Video Electronics Standards Association (VESA) local bus, and a Peripheral Component Interconnect (PCI) bus.

The communication apparatus 1600 typically includes a variety of computer system readable medium. The medium may be any available medium accessible by a terminal device, including a volatile and a non-volatile medium, a removable and a non-removable medium.

The memory 1620 may include computer system readable medium in the form of volatile memory, such as Random Access Memory (RAM) and/or cache memory. The terminal device may further include other removable/non-removable, volatile/non-volatile computer system storage medium. Although not shown in FIG. 16, a disk drive for reading and writing to a removable non-volatile disk (e.g., a "floppy disk"), and an optical disk drive for reading and writing a removable non-volatile optical disk (e.g., Compact Disc Read Only Memory (CD-ROM), a Digital Video Disc Read Only Memory (DVD-ROM) or other optical medium) may be provided. In these cases, each drive may be connected to the communication bus 1640 via one or more interfaces of data medium. The memory 1620 may include at least one program product with a set (e.g., at least one) of program modules. These program modules are configured to perform the functions of the various embodiments of the present application.

A program/utility having a set (at least one) of program modules may be stored in the memory 1620. Such program modules include, but are not limited to, an operating system, one or more application programs, other program modules, and program data. Each or some combination of these examples may include an implementation in a network environment. Program modules generally perform the functions and/or methods described in the embodiments of the present application.

The communication apparatus 1600 may also communicate with one or more external devices (e.g., a keyboard, a pointing device, a display, etc.), may also communicate with one or more devices that enable a user to interact with the terminal device, and/or may communicate with any device (e.g., a network card, modem, etc.) that enables the terminal device to communicate with one or more other computing devices. The communication may be performed through the communication interface 1630. Moreover, the communication apparatus 1600 may also communicate with one or more networks (e.g., a Local Area Network (LAN), a Wide Area Network (WAN), and/or a public network, e.g., the Internet) through a network adapter (not shown in FIG. 16). The network adapter may communicate with other modules of the terminal device through the communication bus 1640. It should be understood that although not shown in FIG. 16, the communication apparatus 1600 may be used in conjunction with other hardware and/or software modules, including but not limited to: microcode, device drivers, redundant processing units, external disk drive arrays, Redundant Arrays of Independent Drives (RAID) systems, tape drives, and data backup storage systems, etc.

The processor 1610 performs various functional applications and data processing by executing programs stored in the memory 1620, for example, performing the method provided by the embodiments of the present application.

It may be understood that the connection relationships of interfaces between modules shown in the embodiments of the present application are only illustrative and do not constitute a structural limitation on the communication apparatus 1600. In other embodiments of the present application, the communication apparatus 1600 may also adopt different connection methods of interfaces in the above embodiments, or a combination of multiple connection methods of interfaces.

In the above embodiments, the involved processor may include, for example, a CPU, a DSP, a microcontroller, or a digital signal processor. It may also include a GPU, an embedded Neural-network Process Unit (NPU), and an Image Signal Processor (ISP). The processor may also include necessary hardware accelerators or logic processing hardware circuits, such as ASICs, or one or more integrated circuits for controlling the execution of the program of the technical solutions of the present application. In addition, the processor may have the function of operating one or more software programs. The software programs may be stored in a storage medium.

An embodiment of the present application further provides a computer-readable storage medium having a program stored thereon. When the program is executed on a terminal device, the terminal device is caused to perform the communication method provided by the shown embodiments of the present application. Alternatively, when the program is executed on a network device, the network device is caused to perform the communication method provided by the shown embodiments of the present application.

An embodiment of the present application further provides a computer program product comprising a program. When the program is executed on a terminal device, the terminal device is caused to perform the communication method provided by the shown embodiments of the present application. Alternatively, when the program is executed on a network device, the network device is caused to perform the communication method provided by the shown embodiments of the present application.

Those of ordinary skill in the art may realize that the units and algorithm steps described in the embodiments disclosed herein may be implemented in electronic hardware, in computer software, or in a combination of both. Whether the functions are performed in hardware or in software depends on the specific application and design constraints of the technical solution. Professionals in the art may implement the described functions for each specific application with different methods, but such implementation should not be considered as going beyond the scope of the present application.

Those skilled in the art may clearly understand that, for the convenience and brevity of description, the specific operation processes of the systems, apparatuses, and units described above may refer to the corresponding processes in the foregoing method embodiments, and will not be repeated herein.

In the several embodiments provided in the present application, any function, if implemented in the form of a software functional unit and sold or used as an independent product, may be stored in a computer-readable storage medium. Based on the understanding, the technical solution of the present application, in essence, or the part contributing to the prior art, or part of the technical solution, may be embodied in the form of a software product. The computer software product is stored in a storage medium and includes several instructions to enable a computer device (which may be a personal computer, a server, or a network device, etc.) to perform all or part of the steps of the methods described in the various embodiments of the present application. The aforementioned storage medium includes various types of media that may store program code, such as USB flash disk, mobile hard disk, Read-Only Memory (ROM), Random Access Memory (RAM), magnetic disk, or optical disk, etc.

The above are only specific implementations of the present application. Any person skilled in the art may easily think of variations or substitutions within the technical scope disclosed in the present application, which should be covered by the protection scope of the present application. The protection scope of the present application shall be subject to the protection scope of the claims.

## Claims

1. A communication method, **characterized in that** the method comprises:

selecting a first random access occasion RO group from a target time period for transmitting a random access request, the target time period being determined according to a first time period, the first time period being a time period to which a first set corresponds, the first set including one or more first RO groups;
wherein ROs in the first RO group are mapped to a first synchronization signal block SSB, the target time period includes K association pattern periods, and K is a positive integer.

2. The method according to claim 1, **characterized in that** the target time period is the first time period.

3. The method according to claim 1, **characterized in that** the target time period is a maximum of time periods to which M sets correspond, wherein ROs in an RO group in an m-th set in the M sets are mapped to an m-th SSB in M SSBs, wherein 0<m<M+1, m is a positive integer, and M is a positive integer.

4. The method according to claim 1, **characterized in that** the target time period is a least common multiple of time periods to which M sets correspond, and ROs in an RO group in an m-th set in the M sets are mapped to an m-th SSB in M SSBs, wherein 0<m<M+1, m is a positive integer, and M is a positive integer.

5. The method according to any one of claim 1 to claim 4, **characterized in that** Q is determined according to a number of repetitions of transmission of the random access request and a number of target ROs in an association pattern period, the Q being a number of association pattern periods in a second time period, the second time period being a time period to which a second set corresponds, and wherein there is at least one second RO group in the second set, wherein ROs in a second RO group are mapped to a second SSB, the second SSB is any one of M SSBs, M is a positive integer, and Q is a positive integer.

6. The method according to any one of claim 1 to claim 4, **characterized in that** Q is determined according to a ratio of a number of target ROs in a second time period to a number of target ROs in an association pattern period, the Q being a number of association pattern periods in the second time period, and wherein there is no target RO in the second time period that is not grouped into a second RO group, the second time period being a time period to which a second set corresponds, the second set including one or more second RO groups, and wherein ROs in a second RO group are mapped to a second SSB, the second SSB is any one of M SSBs, M is a positive integer, and Q is a positive integer.

7. The method according to claim 6, **characterized in that** the number of target ROs in the second time period is determined according to a least common multiple of a number of repetitions of transmission of the random access request and the number of target ROs in the association pattern period.

8. The method according to any one of claim 5 to claim 7, **characterized in that** a target RO is an RO mapped to the second SSB, and wherein different target ROs are of different positions in time domain, and wherein respective second SSBs to which the different target ROs map correspond to a same set of preambles.

9. The method according to any one of claim 5 to claim 8, **characterized in that** a target RO is a dedicated RO, and wherein the dedicated RO supports a multi-Physical Random Access Channel PRACH transmission and does not support a single-PRACH transmission.

10. The method according to any one of claim 5 to claim 9, **characterized in that** the method further comprises:

receiving a first indication, the first indication for indicating that the Q is determined by a first implementation, or, the first indication for indicating that the Q is determined by a second implementation;
wherein the first implementation is an implementation according to claim 6 or claim 7; and
the second implementation is an implementation according to claim 5.

11. The method according to any one of claim 1 to claim 10, **characterized in that** the method further comprises:
receiving a second indication, the second indication for indicating that the random access request is transmitted on a dedicated RO, or, the second indication for indicating that the random access request is transmitted on a shared RO.

12. A communication method, **characterized in that** the method comprises:

receiving a random access request in at least one time period, the at least one time period including a target time period, the target time period being determined according to a first time period, the first time period being a time period to which a first set corresponds, the first set including one or more first random access occasion RO groups;

wherein ROs in the first RO group are mapped to a first synchronization signal block SSB, the target time period includes K association pattern periods, and K is a positive integer.

13. The method according to claim 12, **characterized in that** the target time period is the first time period.

14. The method according to claim 12, **characterized in that** the target time period is a maximum of time periods to which M sets correspond, wherein ROs in an RO group in an m-th set in the M sets are mapped to an m-th SSB in M SSBs, wherein 0<m<M+1, m is a positive integer, and M is a positive integer.

15. The method according to claim 12, **characterized in that** the target time period is a least common multiple of time periods to which M sets correspond, and ROs in an RO group in an m-th set in the M sets are mapped to an m-th SSB in M SSBs, wherein 0<m<M+1, m is a positive integer, and M is a positive integer.

16. The method according to any one of claim 12 to claim 15, **characterized in that** Q is determined according to a number of repetitions of transmission of the random access request and a number of target ROs in an association pattern period, the Q being a number of association pattern periods in a second time period, the second time period being a time period to which a second set corresponds, and wherein there is at least one second RO group in the second set, wherein ROs in a second RO group are mapped to a second SSB, the second SSB is any one of M SSBs, M is a positive integer, and Q is a positive integer.

17. The method according to any one of claim 12 to claim 15, **characterized in that** Q is determined according to a ratio of a number of target ROs in a second time period to a number of target ROs in an association pattern period, the Q being a number of association pattern periods in the second time period, and wherein there is no target RO in the second time period that is not grouped into a second RO group, the second time period being a time period to which a second set corresponds, the second set including one or more second RO groups, and wherein ROs in a second RO group are mapped to a second SSB, the second SSB is any one of M SSBs, M is a positive integer, and Q is a positive integer.

18. The method according to claim 17, **characterized in that** the number of target ROs in the second time period is determined according to a least common multiple of a number of repetitions of transmission of the random access request and the number of target ROs in the association pattern period.

19. The method according to any one of claim 16 to claim 18, **characterized in that** a target RO is an RO mapped to the second SSB and of a different position in time domain, and wherein respective second SSBs to which different target ROs map correspond to a same set of preambles.

20. The method according to any one of claim 16 to claim 19, **characterized in that** a target RO is a dedicated RO, and wherein the dedicated RO supports a multi-Physical Random Access Channel PRACH transmission and does not support a single-PRACH transmission.

21. The method according to any one of claim 16 to claim 20, **characterized in that** the method further comprises:

transmitting a first indication, the first indication for indicating that the Q is determined by a first implementation, or, the first indication for indicating that the Q is determined by a second implementation;
wherein the first implementation is an implementation according to claim 17 or claim 18; and
the second implementation is an implementation according to claim 16.

22. The method according to any one of claim 12 to claim 21, **characterized in that** the method further comprises:
transmitting a second indication, the second indication for indicating that the random access request is transmitted on a dedicated RO, or, the second indication for indicating that the random access request is transmitted on a shared RO.

23. A communication apparatus, **characterized in that** the communication apparatus comprises: a processor and a memory, the memory for storing a program, the processor for executing the program to perform the communication method according to any one of claims 1 to 11.

24. The communication apparatus according to claim 23, **characterized in that** the communication apparatus is a chip, or the communication apparatus is a terminal device.

25. A communication apparatus, **characterized in that** the communication apparatus comprises: one or more functional modules, the one or more functional modules for performing the communication method according to any one of claims 1 to 11.

26. A communication apparatus, **characterized in that** the communication apparatus comprises: a processor and a memory, the memory for storing a program, the processor for executing the program to perform the communication method according to any one of claims 12 to 22.

27. The communication apparatus according to claim 26, **characterized in that** the communication apparatus is a chip, or the communication apparatus is a network device.

28. A communication apparatus, **characterized in that** the communication apparatus comprises: one or more functional modules, the one or more functional modules for performing the communication method according to any one of claims 12 to 22.

29. A computer-readable storage medium, **characterized in that** the computer-readable storage medium stores a program, wherein when the program is executed on a terminal device, the terminal device is caused to perform the communication method according to any one of claims 1 to 11, or when the program is executed on a network device, the network device is caused to perform the communication method according to any one of claims 12 to 22.

terminal device                                    network device

111.random access request

112.random access response

# FIG. 1A

terminal device                          network device

121.message 1(Msg 1)

122.message 2(Msg 2)

123.message 3(Msg 3)

124.message 4(Msg 4)

# FIG. 1B

Legend

ROjk    represents an RO resource

frequency domain

PRACH configuration period    ...    PRACH configuration period

| RO0k | RO1k | ... | ROjk | ... | RO0k | RO1k | ... | ROjk |
|------|------|-----|------|-----|------|------|-----|------|
| ... | ... | | ... | | ... | ... | | ... |
| RO03 | RO13 | | ROj3 | | RO03 | RO13 | | ROj3 |
| RO02 | RO12 | ... | ROj2 | ... | RO02 | RO12 | ... | ROj2 |
| RO01 | RO11 | | ROj1 | | RO01 | RO11 | | ROj1 |
| RO00 | RO10 | | ROj0 | | RO00 | RO10 | | ROj0 |

time domain

# FIG. 2

Legend

| | |
|---|---|
| SSB0 | represents an SSB mapped in an RO with index 0 |

association period of mapping between SSBs and ROs (4 PRACH periods)

| SSB0 | SSB1 | SSB2 | SSB3 | SSB4 | SSB5 | SSB6 | SSB7 |
|------|------|------|------|------|------|------|------|
| SSB0 | SSB1 | SSB2 | SSB3 | SSB4 | SSB5 | SSB6 | SSB7 |
| SSB0 | SSB1 | SSB2 | SSB3 | SSB4 | SSB5 | SSB6 | SSB7 |
| SSB0 | SSB1 | SSB2 | SSB3 | SSB4 | SSB5 | SSB6 | SSB7 |

## FIG. 3a

Legend

| | |
|---|---|
| SSB0 | represents an SSB mapped in an RO with index 0 |

association period of mapping between SSBs and ROs (2 PRACH periods)

| SSB1 | SSB3 | SSB5 | SSB7 | SSB1 | SSB3 | SSB5 | SSB7 |
|------|------|------|------|------|------|------|------|
| SSB1 | SSB3 | SSB5 | SSB7 | SSB1 | SSB3 | SSB5 | SSB7 |
| SSB0 | SSB2 | SSB4 | SSB6 | SSB0 | SSB2 | SSB4 | SSB6 |
| SSB0 | SSB2 | SSB4 | SSB6 | SSB0 | SSB2 | SSB4 | SSB6 |

## FIG. 3b

Legend

| | |
|---|---|
| SSB0 | SSB0 represents an SSB mapped in an RO with index 0 |

association period of mapping between SSBs and ROs (1 PRACH period)

| SSB3 | SSB7 | SSB3 | SSB7 | SSB3 | SSB7 | SSB3 | SSB7 |
|------|------|------|------|------|------|------|------|
| SSB2 | SSB6 | SSB2 | SSB6 | SSB2 | SSB6 | SSB2 | SSB6 |
| SSB1 | SSB5 | SSB1 | SSB5 | SSB1 | SSB5 | SSB1 | SSB5 |
| SSB0 | SSB4 | SSB0 | SSB4 | SSB0 | SSB4 | SSB0 | SSB4 |

## FIG. 3c

association period of mapping between SSBs and ROs (1 PRACH period)

| SSB6/7 | SSB6/7 | SSB6/7 | SSB6/7 | SSB6/7 | SSB6/7 | SSB6/7 | SSB6/7 |
| SSB4/5 | SSB4/5 | SSB4/5 | SSB4/5 | SSB4/5 | SSB4/5 | SSB4/5 | SSB4/5 |
| SSB2/3 | SSB2/3 | SSB2/3 | SSB2/3 | SSB2/3 | SSB2/3 | SSB2/3 | SSB2/3 |
| SSB0/1 | SSB0/1 | SSB0/1 | SSB0/1 | SSB0/1 | SSB0/1 | SSB0/1 | SSB0/1 |

Legend

SSB0 represents an SSB mapped in an RO with index 0

FIG. 3d

FIG. 4

time domain

RO16
RO15(SSB1)
RO14(SSB0)
RO13(SSB1)
RO12(SSB0)
RO11
RO10
RO9
RO8
RO7(SSB1)
RO6
RO5(SSB0)
RO4(SSB1)
RO3(SSB0)
RO2(SSB1)
RO1(SSB0)

association pattern period 2

association pattern period 1

association period 3

association period 2

association period 1

PRACH configuration period 4

PRACH configuration period 3

PRACH configuration period 2

PRACH configuration period 1

ROs not mapped with SSBs

invalid RO

ROq mapped with SSBp, both q and p are integers

ROq(SSBp)

network device

terminal device

# FIG. 5

| terminal device | | network device |
|---|---|---|

601. transmitting a random access request N times repeatedly
(based on a first RO group selected from a target time period)

# FIG. 6

association pattern period

RO1(SSB0) RO2(SSB1) RO3(SSB0) RO4(SSB1) RO5(SSB0) RO6 RO7(SSB1) RO8 RO9 RO10 RO11 RO12(SSB0) RO13(SSB1) RO14(SSB0) RO15(SSB1) RO16

target ROs mapped to SSB0

target ROs mapped to SSB1

# FIG. 7

EP 4 761 408 A1

FIG. 8

EP 4 761 408 A1

FIG. 9

FIG. 10

FIG. 11

EP 4 761 408 A1

EP 4 761 408 A1

frequency
domain

second time period (4 association pattern periods)

| association pattern period 1 | association pattern period 2 | association pattern period 3 | association pattern period 4 |

RO03(SSB1)  RO43(SSB1)  RO63(SSB1)  ROa3(SSB1)  ROc3(SSB1)  ROg3(SSB1)  ROi3(SSB1)  ROm3(SSB1)

RO00(SSB1)  RO20(SSB1)  RO40(SSB1)  RO60(SSB1)  RO80(SSB1)  ROa0(SSB1)  ROc0(SSB1)  ROe0(SSB1)  ROg0(SSB1)  ROi0(SSB1)  ROk0(SSB1)  ROm0(SSB1)

second RO
group 1

second RO
group 2

second RO
group 3

time
domain

FIG. 12

FIG. 13

**FIG. 14**

**FIG. 15**

**FIG. 16**

## INTERNATIONAL SEARCH REPORT

| | International application No. |
|---|---|
| | **PCT/CN2024/109776** |

| **A.** | **CLASSIFICATION OF SUBJECT MATTER** |
|---|---|
| | H04W 72/0446(2023.01)i |

According to International Patent Classification (IPC) or to both national classification and IPC

| **B.** | **FIELDS SEARCHED** |
|---|---|

Minimum documentation searched (classification system followed by classification symbols)

    IPC:H04W

Documentation searched other than minimum documentation to the extent that such documents are included in the fields searched

Electronic data base consulted during the international search (name of data base and, where practicable, search terms used)

    CNTXT, ENTXTC, DWPI, ENTXT, 3GPP: RO组, 时间周期, 随机接入时机, 随机接入时机组, 挑选, 同步信号块, 选取, 选择, RO, SSB, PRACH, group, Time Period, select

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | CN 116234052 A (HUAWEI TECHNOLOGIES CO., LTD.) 06 June 2023 (2023-06-06) description, paragraphs 3, 6, 15, 33-35, 41, 45, 137, and 139 | 1-2, 12-13, 23-29 |
| A | CN 110062461 A (HUAWEI TECHNOLOGIES CO., LTD.) 26 July 2019 (2019-07-26) entire document | 1-29 |
| A | CN 116456488 A (VIVO MOBILE COMMUNICATION CO., LTD.) 18 July 2023 (2023-07-18) entire document | 1-29 |
| A | WO 2022006851 A1 (GUANGDONG OPPO MOBILE TELECOMMUNICATIONS CORP., LTD.) 13 January 2022 (2022-01-13) entire document | 1-29 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **30 October 2024** | **06 November 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
**Information on patent family members**

International application No.

**PCT/CN2024/109776**

| Patent document cited in search report | | | Publication date (day/month/year) | Patent family member(s) | | | Publication date (day/month/year) |
|---|---|---|---|---|---|---|---|
| CN | 116234052 | A | 06 June 2023 | WO | 2023103873 | A1 | 15 June 2023 |
| CN | 110062461 | A | 26 July 2019 | WO | 2019141123 | A1 | 25 July 2019 |
| CN | 116456488 | A | 18 July 2023 | WO | 2023131175 | A1 | 13 July 2023 |
| WO | 2022006851 | A1 | 13 January 2022 | CN | 115486194 | A | 16 December 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311002869